**Europäisches Patentamt**

**European Patent Office**

**Office européen des brevets**

(19)

(11) Veröffentlichungsnummer: **0 363 720**
**A2**

(12) # EUROPÄISCHE PATENTANMELDUNG

(21) Anmeldenummer: 89117709.9

(22) Anmeldetag: 26.09.89

(51) Int. Cl.⁵: **A47B 47/05 , F16B 12/02**

(30) Priorität: 08.10.88 DE 3834276

(43) Veröffentlichungstag der Anmeldung:
18.04.90 Patentblatt 90/16

(84) Benannte Vertragsstaaten:
**AT BE CH DE FR GB IT LI LU NL**

(71) Anmelder: **VS Vereinigte
Spezialmöbelfabriken Verwaltungs-GmbH
Hochhäuser Strasse 8
D-6972 Tauberbischofsheim(DE)**

(72) Erfinder: **Schmid, Karl-Heinz
Finkenweg 4
D-6974 Grünsfeld(DE)**

(74) Vertreter: **Patentanwälte RUFF, BEIER und
SCHÖNDORF
Neckarstrasse 50
D-7000 Stuttgart 1(DE)**

(54) **Möbeleinheit.**

(57) Bei einer Möbeleinheit (1), insbesondere einer schrankartig geschlossenen bzw. schließbaren Möbeleinheit, aus vertikalen Stützenprofilen (12) und horizontalen Traversenprofilen (13) bilden diese Profile einen metallischen vorderen Tragrahmen und einen hinteren Tragrahmen, die ausschließlich über Platten (15) von Seitenteilen, jedoch nicht über sog. Konstruktionsböden miteinander tragend verbunden sind, so daß der Sockel-Boden (10) und der Decken-Boden (11) ohne Zerlegung des tragenden Gerüstes des Möbelkörpers herausgenommen und Installationsräume ohne weiteres zugänglich gemacht werden können. Die Stützenprofile (12) und ggf. vorgesehene Plattenkanten-Randprofile (14) umgreifen Randstege (29) der zugehörigen Platten, so daß diese durch die Verbindung mit den Strangprofilen nicht gesprengt werden können. Sämtliche Aluminium- bzw. Strangprofile weisen nur nutartig offene Profilabschnitte auf, so daß sich eine sehr einfache Herstellung sämtlicher Profile ggf. unter Verwendung eines einzigen Extrudierwerkzeuges ergibt.

Fig.1

# Möbeleinheit

Die Erfindung betrifft eine Möbeleinheit, die zur Erzielung eines einfachen Aufbaues erfindungsgemäß aus miteinan- der zu verbindenden Bauteilen bestehen kann und im aufgebauten Zustand z.B. nach Art von Schrankwänden Platten enthält, die Front-, Rücken-, Seiten- und/oder Boden- bzw. Deckenplatten sein können. Der Möbelkorpus weist außerdem Längsprofile bzw. Profilabschnitte auf, welche zweckmäßig zur Aufnahme des Innenausbaues des Möbelkörpers, als Kantenschutz- bzw. Verbindungsprofile der Platten o.dgl. dienen.

Bei Möbeleinheiten werden Boden- und Deckenplatten als sog. Konstruktionsböden in den tragenden Aufbau des Möbelkorpus z.B. dadurch einbezogen, daß diese Platten mit Strangprofilen der Seitenteile, ggf. unter Zwischenschaltung fest bzw. unlösbar mit den Konstruktionsböden verbundener Strangprofile, mechanisch steif verbunden werden. Dadurch sind diese Boden- und Deckenplatten tragender Bestandteile der Möbel einheit, weshalb sie nach deren Aufbau praktisch nur unter völliger Zerlegung der Möbeleinheit wieder gelöst, nicht jedoch vom ansonsten in seiner Aufbauform erhaltenen, meist annähernd raumhohen Möbel entfernt werden können. Dadurch aber können z.B. Versorgungsleitungen, wie Elektro- und Sanitär-Installationen, die sich unterhalb der Bodenplatte und/oder oberhalb der Deckenplatte befinden, nach dem Aufbau der Möbeleinheit nicht mehr einfach zugänglich gemacht bzw. solche Versorgungsleitungen oder andere Installationen nicht mehr ohne Abbau der gesamten Möbeleinheit montiert werden. Solche Möbeleinheiten können aber noch weitere wesentliche Nachteile aufweisen. Erfolgt zum Beispiel die Verbindung entsprechender Strangprofile mit den Plattenkanten über Zapfenstege, die in eine Mittelnut der Plattenkante eingreifen, so können diese die Platte, meist eine Spanplatte, sprengen. Sind die Stangenprofile mit Einhängeöffnungen in Form von Durchbrüchen versehen, so ist eine zuverlässig abgedichtete Ausführung des Möbelkorpus kaum möglich, was hinsichtlich der Schallisolation, des Eindringens von Staub, der Verschmutzung und ähnlichem nachteilig ist. Außerdem sind solche Strangprofile nur relativ schwierig zu extrudieren bzw. herzustellen, weil sie infolge der Durchbrüche in ihrer Längsrichtung abwechselnd unterschiedliche Querschnitte aufweisen. Stellfüsse von bekannten Möbeleinheiten sind schwierig einzustellen, und die Befestigung von Beschlagteilen ist kompliziert sowie nur in beschränktem Maße möglich.

Der Erfindung liegt des weiteren die Aufgabe zu Grunde, eine Möbeleinheit der genannten Art zu schaffen, bei welcher Nachteile bekannter Lösungen vermieden sind und die insbesondere bei einfachem Aufbau und hoher Stabilität eine leichte Zugänglichkeit verdeckter Installationen bzw. für die anzubringenden Beschlagteile gewährleistet.

Zur Lösung dieser Aufgabe bilden die Strangprofile mindestens einen in sich im wesentlichen geschlossenen, tragfähigen Rahmen, in welchen höchstens an einer Rahmenseite oder zwei einander gegenüberliegenden Rahmenseiten plattentragend einbezogen sind, während die im Bereich der übrigen Rahmenseiten ggf. vorzusehenden Platten unabhängig von einer bzw. ohne Zerlegung des Rahmens wenigstens teilweise, insbesondere vollständig, vom aufgebauten übrigen Möbelkorpus gelöst oder sogar ganz von diesem entfernt werden können. Diese lösbaren Platten können dabei lösbar und ggf. formschlüssig mit den zugehörigen Rahmenseiten bzw. Strangprofilen verbunden oder lediglich durch Auflegen auf Profilauflager gehalten sein. Besonders vorteilhaft ist es, wenn die etwa horizontalen, in Höhe der unteren und/oder der oberen Rahmenzarge liegenden Platten wenigstens teilweise bzw. für den größten Teil der zugehörigen Grundfläche wirksam oder insbesondere als Ganzes vollständig vom Rahmen lösbar sind, so daß ggf. nur die seitlichen, aufrechten Rahmenteile tragend mit Platten verbunden sind, welche die steife Verbindung zwischen dem vorderen und dem rückwärtigen Bereich des Möbelkorpus herstellen und daher in der Regel Seiten- bzw. aufrechte Zwischenwände des Möbelkorpus bilden.

Gemäß der Erfindung ist zumindest teilweise eine Skelettbauweise für den Möbelkorpus vorgesehen, die zweckmäßig einen Frontrahmen und einen dazu im wesentlichen parallelen bzw. ebenfalls aufrechten Rückenrahmen über die Möbelbreite bzw. über einen Teil der Möbelbreite bildet, wobei die beiden in sich mechanisch stabilen und zwischen zwei Paaren paralleler, einander gegenüberliegender Rahmenzargen nicht miteinander tragend verbundenen Rahmen dadurch tragend miteinander verbunden sind, daß zwischen den beiden übrigen Paaren von gegenüberliegenden Rahmenzargen direkte, mechanisch steife Verbindungen, nämlich bevorzugt Platten, vorgesehen sind, die mit den zugehörigen Rahmenzargen beider Rah men eine formsteife Baueinheit bildet, während die übrigen Rahmenzargen beider Rahmen mit ggf. ihnen zugehörigen Platten keine Baueinheit bilden.

Zur Bildung des jeweiligen Rahmens sind als Strangprofile zweckmäßig aufrechte bzw. vertikale seitliche Profilstützen und diese verbindende, in Breitenrichtung der Möbeleinheit bzw. annähernd horizontal liegende Traversenprofile vorgesehen, von denen sich jeweils eines im oberen Bereich und eines im unteren Bereich der Profilstützen bzw. der Möbeleinheit befindet. Unter Strangprofilen sind z.B. solche Profile zu verstehen, die durch Abschnitte von einem Profilstrang hergestellt und daher in ihrer Länge einfach an die jeweils gewünschten Abmessungen der Möbeleinheit angepaßt werden können. Als Strangprofile sind gebogene Blechprofile, Kunststoffprofile, Metall- bzw. Aluminiumprofile, gezogene oder extrudierte Profile, ggf. auch durch spanabhebende Bearbeitung hergestellte Profile oder beliebige Mischformen der genannten Profile, denkbar, wobei extrudierte, über ihren Querschnitt einteilige Aluminiumprofile für die meisten Anwendungsfälle bevorzugt sind.

Gemäß einem weiteren Merkmal der Erfindung wird ein Strangprofil auch für andere als die beschriebenen Möbeleinheiten vorgeschlagen und beansprucht, das insbesondere als Stützenprofil vorgesehen und trotz seiner Ausbildung zur Halterung von Möbelteilen, wie höhenverstellbaren Zwischen-Böden, von solchen Durchbrüchen völlig frei ist, die es zwischen zwei gebenüberliegenden Außenseiten oder zwischen zwei im Winkel zueinander liegenden Außenseiten durchsetzt. Dadurch sowie wegen seiner Ausbildung für den beschriebenen Rahmenaufbau, läßt sich das jeweilige Strangprofil sehr einfach, insbesondere im Extrudierverfahren, herstellen, und außerdem ist das Strangprofil nicht durchlässig für Staub, Zugluft, Schall und dgl..

Ebenfalls auch für andere als die beschriebenen Möbeleinheiten geeignet und insofern für sich beansprucht ist eine Plattenanschlußprofil gemäß der Erfindung, welches den Rand der mit dem zugehörigen Strangprofil zu verbindenden Platte an zwei voneinander abgekehrten Außenseiten um- bzw. übergreift, wobei eine dieser Außenseiten oder beide zweckmäßig gegenüber den zugehörigen Platten-Außenseiten derart zurückversetzt sind, daß ein gegenüber der Plattendicke dünnerer Randsteg gebildet ist und die voneinander abgekehrten Außenseiten des Plattenanschlußprofiles im wesentlichen bündig mit den Plattenaußenseiten liegen. Dadurch bildet das Plattenanschlußprofil eine den Rand der Platte aufnehmende Fassung mit gleichzeitiger Abdeckung der zurückversetzten Randkanten der Platte, so daß selbst dann eine Sprengung der Platte nicht möglich ist, wenn innerhalb dieser Fassung ein in die Platte eingreifender Zapfensteg o.dgl. des Plattenanschlußprofiles vorgesehen wäre. Ein weiterer wesentlicher Vorteil dieser Ausbildung liegt darin, daß das Strangprofil auch in seinem das Plattenanschlußprofil bildenden Bereich mit zwei an den Außenseiten der Platte liegenden Profilabschnitten, beispielsweise Eingriffsprofilen für Bauteile der Möbeleinheit, versehen sein kann, so daß es möglich ist, das Strangprofil in seiner Querschnittserstreckung parallel zur Plattenmittelebene sehr kompakt auszubilden, ohne dadurch die Unterbringungsmöglichkeiten solcher Eingriffsprofile einzuschränken. Das Stützenprofil oder das Traversenprofil oder beide Profile können nicht nur an zwei voneinander abgekehrten Profilseiten, sondern an drei oder allen vier Profilseiten ein, zwei oder mehr gesonderte Befestigungs- bzw. Eingriffsprofile aufweisen, von denen mindestens eines, insbesondere mehrere bzw. alle, jeweils durch eine zur zugehörigen Profilseite offene Nut gebildet sind, so daß einerseits zahlreiche Befestigungsmöglichkeiten gegeben sind und andererseits im jeweiligen Einbaufall nicht benötigte Eingriffsprofile einfach abgedeckt werden können. Sind an einer einzigen Seite bzw. an zwei voneinander abgekehrten Profil seiten jeweils mindestens zwei Befestigungsprofile benachbart bzw. parallel zueinander vorgesehen, so ergeben sich entsprechende Befestigungsmöglichkeiten in unterschiedlichen, hintereinander liegenden Ebenen.

Gemäß der Erfindung sind die Stützenprofile und die Traversenprofile zweckmäßig nicht durch gleiche Profile, sondern durch unterschiedliche Profile gebildet, wobei sich das Traversenprofil nicht nur durch das Weglassen des Plattenanschlußprofiles vom Stützenprofil, sondern auch durch die Ausbildung weiterer Profilabschnitte unterscheidet, jedoch zweckmäßig an seiner von der zugehörigen Plattenkante abgekehrten Längsseite als im wesentlichen gleicher Profilabschnitt wie das Stützenprofil ausgebildet ist. Dieser Profilabschnitt bildet zweckmäßig ein im wesentlichen über die Breite des Strangprofiles reichendes Beschlageingriffsprofil mit gegenüber der Profilbreite wesentlich kleiner Profilhöhe, wobei dieses Beschlageingriffsprofil z.B. zur Befestigung von Scharnierträgern bzw. Türbandhalterungen geeignet ist, die im Falle ihrer Anbringung an einer Profilstütze eine aufrechte Schwenkachse und im Falle ihrer Anbringung an einem Traversenprofil eine annähernd horizontale Schwenkachse für eine Klappe o.dgl. bilden.

Außer den zwei unterschiedlichen Profilen, die zur Ausbildung der genannten Skelettbauweise ausreichen, ist zweckmäßig noch ein weiteres Profil als Fachbodenverstärkung bzw. als Plattenkanten-Randprofil, beispielsweise für zwischen-bzw. lose eingelegte Fachböden, vorgesehen, das ein gleiches Randanschlußprofil wie das Stützenprofil aufweisen bzw. entsprechend der Beschreibung dieses Randanschlußprofiles ausgebildet sein kann. Insofern werden für die erfindungsgemäße Möbeleinheit nur drei unterschiedliche Strangprofile benötigt, wobei zumindest bei einzelnen Fachböden auch auf das Plattenkanten-Randprofil verzichtet werden kann.

Im Bereich des Plattenanschlußprofiles bildet das Stützenprofil oder das Plattenkanten-Randprofil oder beide zweckmäßig an den Seitenflanken außen liegende und von den zugehörigen Außenseiten her zugängliche Beschlagaufnahmeprofile, die somit ggf. im Winkel zum Beschlageingriffsprofil vorgesehen sind und mit den Seitenschenkeln des Plattenanschlußprofiles gemeinsame Profilabschnitte bilden, die mit ihren einander zugekehrten Innenseiten an dem Randsteg der zugehörigen Platte abgestützt und daher auch bei geringen Profil-Wandstärken formstarr gesichert sind. Im Falle des Stützenprofiles können diese Beschlagaufnahmeprofile zur höhenverstellbaren Anordnung von Bodenträgern für Fachböden, zur Halterung von Standfüssen, zur über ihre ganze Höhe stufenlos verstellbaren Aufnahme von Verbindungsbeschlägen zur Befestigung von Traversenprofilen und ähnlichem eingesetzt werden. Im Falle des Plattenkanten-Randprofiles können die den Randsteg der Platte überlappenden Beschlagaufnahmeprofile als sog. Organisationsnuten zur Anbringung von Querorganisationsteilen, beispielsweise von Trennbügeln, Buchstützen o.dgl., verwendet werden, die dann in Querrichtung der Möbeleinheit stufenlos über die gesamte Breite des zugehörigen Fachbodens verstellt und in jeder eingestellten Lage festgestellt werden können. Besonders vorteilhaft ist ein solches seitliches Beschlagaufnahmeprofil oder eine ähnliche Befestigungsmöglichkeit aber auch am Traversenprofil so vorgesehen, daß diese Befestigungsmöglichkeit in Einbaulage an der Oberseite und/oder der Unterseite des Traversenprofiles liegt und z.B. für die Befestigung eines Fangbolzens dient, dem an der Innenseite einer Möbeltür ein entsprechender Fanghaken eines Drehstangenschlosses o.dgl. zum Verschließen der Möbeltür zugeordnet ist. Dadurch ist eine Befestigung dieses Fangbolzens oder eines ähnlichen Schloß-Gegengliedes am Fachboden nicht erforderlich. Das Schloßgegenglied bzw. entsprechende Bauteile sind somit Bestandteil der Skelettbauweise bzw. des zugehörigen Rahmens, nämlich im vorliegenden Fall des Frontrahmens.

Durch die erfindungsgemäße Ausbildung ist es des weiteren möglich, den Profilbereich zwischen dem Plattenanschlußprofil und der davon abgekehrten Längsseite des Stützenprofiles bzw. dem von dieser Längsseite her zugänglichen Beschlageingriffsprofil für die Unterbringung seitlicher bzw. seitlich zugänglicher Halterungsprofile zu nutzen, die gegenüber der äußeren Längsseite im Abstand zurückversetzt sind und beispielsweise im Falle der Rückwand der Möbeleinheit zur Aufnahme eines in der Dicke reduzierten Randsteges einer Rückwand-Platte dienen können. Der Rückenrahmen kann daher nach hinten geringfügig über die Rückseite dieser Platte vorstehen, so daß eine gute Hinterlüftung der Möbeleinheit trotz geschlossener Ausbildung durch Abstandhaltung gewährleistet ist.

Durch die erfindungsgemäße Ausbildung des Beschlageingriffsprofiles ist eine stufenlose Längsverstellung der zu befestigenden Beschlagteile und deren Sicherung durch Verspannung bzw. Verklemmung innerhalb des Profiles möglich, ohne daß zur Aufnahme des Beschlagteiles Bohrungen im Strangprofil hergestellt werden müssen. Auch können Scharnierbeschläge als Baueinheit mit der zugehörigen Tür bzw. Klappe montiert werden, da die zugehörigen Klemm- bzw. Spannglieder sowohl bei geöffneter wie bei geschlossener Tür o.dgl. zugänglich sind. Da das Beschlagangriffsprofil einerseits verhältnismäßig flach ist und andererseits sehr nahe bei dem mit ihm nur über einen Mittelsteg verbundenen Plattenanschlußprofil liegt, ergeben sich für die Gewichtsaufnahme kleine Hebelarme bzw. günstige Festigkeitsverhältnisse.

Durchbrüche der beschriebenen Art in metallischen Profilen, insbesondere in Aluminium-Strangprofilen, führen zu scharfen Kanten, Störungen bzw. Schwächungen und Unterbrechungen des Aluminiumgefüges, Lichtdurchtritten und den bereits genannten Nachteilen, weshalb gemäß der Erfindung des weiteren ein auch bei anderen als der beschriebenen Möbeleinheit verwend bares Strangprofil vorgeschlagen und beansprucht wird, das hintereinander liegende Rastglieder für Beschlagteile, wie Bodenträger, für die Aufnahme von Befestigungsschrauben, beispielsweise für die Traversenprofile o.dgl., aufweist, wobei diese Rastglieder nicht durch Durchbrüche, sondern durch am Boden und am Umfang geschlossene Rastvertiefungen gebildet sind, welche nachträglich auf einfache Weise eingeprägt werden können. Damit die beim Einprägen entstehenden, noppenförmigen Erhöhungen auf der von der Vertiefungsseite abgekehrten Seite nicht störend in das Plattenanschlußprofil hineinragen und damit für eine leicht durchzuführende Prägung eine verhältnismäßige geringe Profil-Wanddicke zur Verfügung steht, sind die Rastvertiefungen zweckmäßig an einem Profilabschnitt vorgesehen, der an der von der Vertiefungsseite abgekehrten Seite durch eine Nut derart geschwächt ist, daß die Noppen in dieser Nut liegen können.

Damit der jeweilige, in das Beschlageingriffsprofil einzusetzende Beschlagteil nicht vom Ende des zugehörigen Strangprofiles her eingeführt werden muß, sondern an jeder beliebigen Stelle quer zur Längsrichtung des Strangprofiles eingesetzt werden kann, weist er einen durch eine Kippbewegung einsetzbaren Beschlagträger auf, der in seiner Montage-Kipplage das Beschlageingriffsprofil beispielsweise durch T-förmige Ausbildung formschlüssig hintergreift und im Bereich seiner Enden bzw. beiderseits des zu befestigenden Beschlages, wie eines Scharnieres, Spannschrauben trägt, mit welchen er gegen die Bodenfläche des Beschlageingriffsprofiles gespannt werden kann. Im Bereich der Rückwand der Möbeleinheit kann der Beschlagträger zur Befestigung einer Raumteiler-Trennwand dienen.

Eine besonders vorteilhafte Weiterbildung einer Möbeleinheit der beschriebenen oder einer anderen Art besteht in der Ausbildung eines Fusses, mit welchem ein Teil der Möbeleinheit, insbesondere der jeweilige Rahmen oder die einzelne Stütze, gegenüber dem Raum- bzw. Fußboden oder gegenüber der Decke abgestützt und ggf. höhenverstellt bzw. verspannt werden kann. Dieser erfindungsgemäße Stütz- bzw. Standfuß weist eine Stellspindel mit annähernd über deren gesamte Gewindelänge bzw. sogar eine größere Länge reichenden Schlüsselflächen oder ein Fußlager auf, das über eine einfache Steckverbindung am unteren oder oberen Ende des zugehörigen Möbelteiles gegen die Stützkräfte anschlaggesichert befestigt werden kann; besonders vorteilhaft ist eine Kombination dieser beiden Merkmale vorgesehen. Durch die beschriebene Ausbildung des Plattenanschlußprofiles kann der Fußschaft bzw. dessen Stellspindel in dieses Plattenanschlußprofil verdeckt eingreifen, wobei der in das Plattenanschlußprofil eingreifende Randsteg entsprechend aufgebohrt wird. Da auch die Beschlagaufnahmeprofile im Bereich dieses Plattenanschlußprofiles liegen, ergibt sich eine sehr günstige Kräfteaufnahme. Durch die Schlüsselflächen bzw. dadurch, daß die Stellspindel auch im Gewindebereich als Mehrkant oder Sechskant ausgebildet ist, ist der vorstehende bzw. frei liegende Teil der Stellspindel benachbart zum zugehörigen Ende des Stützprofiles zum Drehen mit einem geeigneten Werkzeugschlüssel zugänglich, so daß die Stellspindel in einer einfachen Gewindebohrung des Fußlagers benachbart zu diesem Ende des Stützenprofiles gelagert sein kann und keine Lagerung oder Betätigungseinrichtung innerhalb eines Strangprofiles bedarf. Des weiteren kann das Fußlager zur Lagesicherung in mindestens einen der Profilabschnitte des Stützenprofiles mit einer Steckzunge, einem Steckdorn o.dgl. vom Profilende her formschlüssig eingesteckt sein, so daß sich eine äußerst einfache Montage und kompakte Ausbildung bei hoher Tragfähigkeit ergibt.

Gemäß der Erfindung ist des weiteren mindestens ein auch für andere, als die beschriebene Möbeleinheit geeignetes Verkleidungsprofil vorgesehen, das clipsartig aufsteckbar ist und diejenigen Profilteile der Strangprofile abdeckt, die nicht für eingreifende Bauteile genutzt werden.

Besonders vorteilhaft ist es, wenn das Verkleidungsprofil nur insofern einteilig mit einem Dichtlippenprofil für wenigstens eine Plattenfuge o.dgl. ausgebildet ist, als es mit diesem Verkleidungsprofil nach Art einer Schweißverbindung einen einzigen Bauteil bildet, jedoch aus einem anderen, nämlich einem weicheren bzw. elastischeren Werkstoff als das aus härterem Kunststoff bestehende Verkleidungsprofil gefertigt ist. Beide Profile können auf einfache Weise z.B. dadurch hergestellt werden, daß sie simultan nebeneinanderliegend durch Extrudieren gefertigt und im Verlaufe des Extrudierens bzw. unmittelbar nach Verlassen der Extrudierwerkzeuge im noch extrudierwarmen Zustand zusammengeführt und dabei entlang einer Lippenkante schmelzwarm miteinander verbunden werden.

Für Fachböden o.dgl. allgemein, und insofern auch für andere Möbeleinheiten als die beschriebene, wird des weiteren eine Standleiste vorgeschlagen, die geringfügig über die Oberseite des Fachbodens vorsteht und vorzugsweise versenkt in diesen eingreift, so daß z.B. zwei in Breitenrichtung des Fachbodens verlaufende und hintereinander liegende Standleisten definierte und ggf. geringfügig federnde Standflächen für Ordner bilden, so daß diese außer einem sicheren Stand auch eine Schonung ihrer Standkanten erhalten. Die Standleisten sind zweckmäßig in Strangprofile bzw. in Plattenkanten-Randprofile einsetzbar, wobei sie vorzugsweise an die Beschlagaufnahmeprofile angepaßt sind.

Zur Überbrückung des Abstandes zwischen den Plattenunterseiten und der Standebene einerseits sowie den Plattenoberseiten und der Raumdecke o.dgl. andererseits sind zweckmäßig Blendenprofile vorgesehen, die aus Blech o.dgl. annähernd winkelförmig ausgebildet sein können. Das zweckmäßig teleskopartig einen Verkleidungsschenkel des Verkleidungsprofiles bzw. die zugehörige Platte hintergreifende Blendenprofil ist vorteilhaft so ausgebildet, daß es in einen am zugehörigen Ende jedes der im Abstand nebeneinander stehenden Stützenprofile vorgesehenen Schlitz eingreift, der zwischen dem Beschlageingriffsprofil und dem Plattenanschlußprofil liegt, so daß das Beschlageingriffsprofil auch im Bereich des Blendenprofiles für den Eingriff geeigneter Bauteile frei bleibt.

Die erfindungsgemäße Ausbildung ist zum bausatzartigen Zusammensetzen unterschiedlichster Möbeleinheiten, z.B. schrankartig geschlossener Möbeleinheiten, regalartig offener Möbeleinheiten, garderobeartiger Möbeleinheiten und ähnlichem, geeignet, wobei die Möbeleinheit mit oder ohne Rückwand ausgebildet sein kann. Des weiteren kann auf eine Wand, z.B. die Rückwand, eine ebenfalls von dem beschriebenen Tragskelett getragene Raumteiler-Trennwand beispielsweise unter Zwischenfügen von Stahlprofilen aufgesetzt werden, wobei die fest mit dem Tragskelett bzw. den Stützenprofilen zu verbindenden Stahlprofile vorteilhaft Einhängemöglichkeiten zum Einhängen von Wandtafeln der Trennwand bilden. In diesen, beispielsweise durch Einhängeöffnungen gebildeten, rastartig verteilten Einhängemöglichkeiten können auch Regalträger o.dgl. befestigt werden, wenn sie im Bereich der Fugen zwischen zwei Wandplatten liegen und daher durch die Fuge hindurch die Einhängeglieder des Regalträgers o.dgl. in Eingriff mit den Einhängeöffnungen gebracht werden können. Des weiteren kann in die Möbeleinheit eine diese durchsetzende Türöffnung zur Verbindung zweier ansonsten gegeneinander abgetrennter Räume eingebaut werden, wofür vorteilhaft ein in das Tragskelett integrierbarer Rahmen aus Türzargenprofilen vorgesehen ist. Des weiteren kann die Möbeleinheit Verglasungen aufweisen.

Diese und weitere Merkmale von bevorzugten Weiterbildungen der Erfindungen gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der jeweiligen Erfindung und auf anderen Gebieten verwirklicht sein und vorteilhafte sowie für sich schutzfähige Ausführungen darstellen können, für die hier Schutz beansprucht wird. Ausführungsbeispiele der Erfindungen sind in den Zeichnungen dargestellt und werden im folgenden näher erläutert. In den Zeichnungen zeigen:

Fig. 1 eine erfindungsgemäße Möbeleinheit im Vertikalschnitt,

Fig. 2 die Möbeleinheit gemäß Fig. 1 im Horizontalschnitt,

Fig. 3 ein erfindungsgemäßes Stützenprofil im Schnitt und in vergrößerter Darstellung,

Fig. 4 ein Traversenprofil in einer Darstellung entsprechend Fig. 3,

Fig. 5 ein Plattenkanten-Randprofil in einer Darstellung entsprechend Fig. 3,

Fig. 6 einen Verbindungsbeschlag in Ansicht,

Fig. 7 den Verbindungsbeschlag gemäß Fig. 6 in teilweise geschnittener Ansicht auf die Unterlängskante,

Fig. 8 den Erfindungsbeschlag gemäß Fig. 6 in teilweise geschnittener Ansicht auf die obere Längskante,

Fig. 9 den Verbindungsbeschlag gemäß Fig. 6 in Ansicht von rechts,

Fig. 10 den Verbindungsbeschlag gemäß Fig. 6 in Ansicht von links,

Fig. 11 einen Ausschnitt der Fig. 1 in vergrößerter Darstellung,

Fig. 12 ein Fußlager in Seitenansicht,

Fig. 13 das Fußlager gemäß Fig. 12 in Ansicht von links,

Fig. 14 das Fußlager gemäß Fig. 13 in Draufsicht,

Fig. 15 einen Stützfuß in Ansicht,

Fig. 16 den Stützfuß gemäß Fig. 15 in Draufsicht,

Fig. 17 einen Bodenträger in Seitenansicht,

Fig. 18 den Bodenträger gemäß Fig. 17 in Ansicht von rechts,

Fig. 19 den Bodenträger gemäß Fig. 17 in Ansicht von links,

Fig. 20 den Bodenträger gemäß Fig. 17 an Ansicht auf die Unterseite,

Fig. 21 den Bodenträger gemäß Fig. 17 in Ansicht auf die Oberseite,

Fig. 22 eine weitere Ausführungsform eines Bodenträgers in einer Darstellung entsprechend Fig. 18,

Fig. 23 den Bodenträger gemäß Fig. 22 in Draufsicht,

Fig. 24 einen Ausschnitt der Fig. 2 in vergrößerter Darstellung,

Fig. 25 den Beschlagträger gemäß Fig. 24 in detaillierter Draufsicht,

Fig. 26 den Beschlagträger gemäß Fig. 25 in Ansicht von rechts und um 90° verdreht dargestellt,

Fig. 27 den Beschlagträger gemäß Fig. 26 in Ansicht von rechts,

Fig. 28 ein weiteres Ausführungsbeispiel einer Möbeleinheit in einer ausschnittsweisen Darstellung entsprechend Fig. 1,

Fig. 29 eine weitere Ausführungsform einer Möbeleinheit in einer ausschnittsweisen Darstellung entsprechend Fig. 28,

Fig. 30 eine weitere Ausführungsform in einer Darstellung entsprechend Fig. 29,

Fig. 31 ein Grundprofil für ein Blendenprofil in Ansicht auf eine Symmetrieseite,

Fig. 32 ein aus dem Grundprofil gemäß Fig. 31 hergestelltes Blendenprofil in gleicher Ansicht,

Fig. 33 ein Türzargenprofil in Längsansicht,

Fig. 34 einen Ausschnitt einer Rückwand mit angesetzter Trennwand,

Fig. 35 einen Vertikalschnitt durch eine Trennwand entsprechend Fig. 34,

Fig. 36 eine weitere Ausführungsform in einer Darstellung entsprechend Fig. 34,

Fig. 37 die Ausführungsform nach Fig. 36 in der Darstellung entsprechend Fig. 35,

Fig. 38 einen Ausschnitt der Fig. 34 in vergrößerter Darstellung und

Fig. 39 einen Ausschnitt der Fig. 36 in vergrößerter Darstellung.

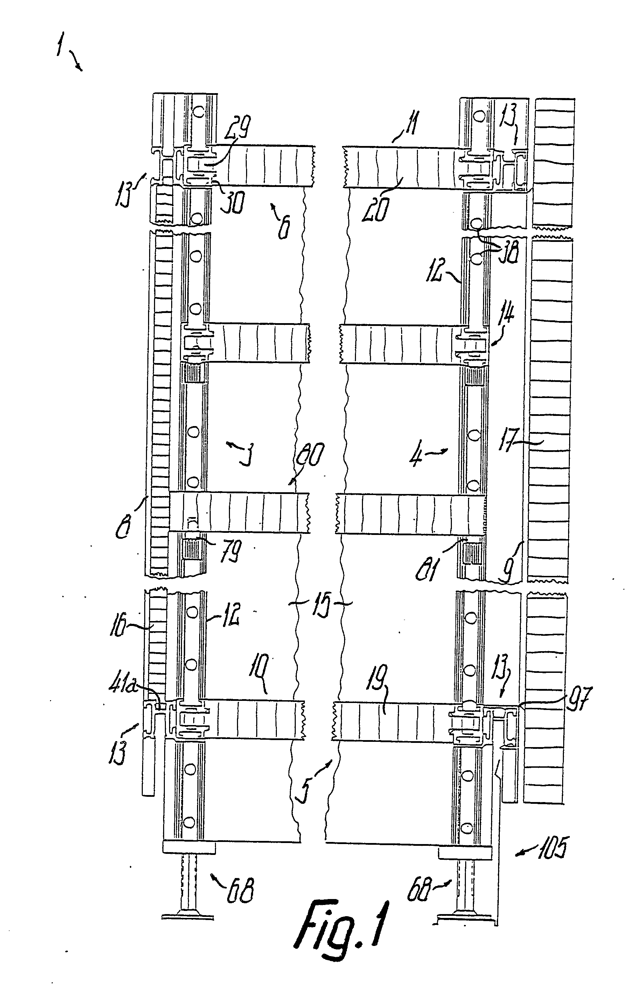

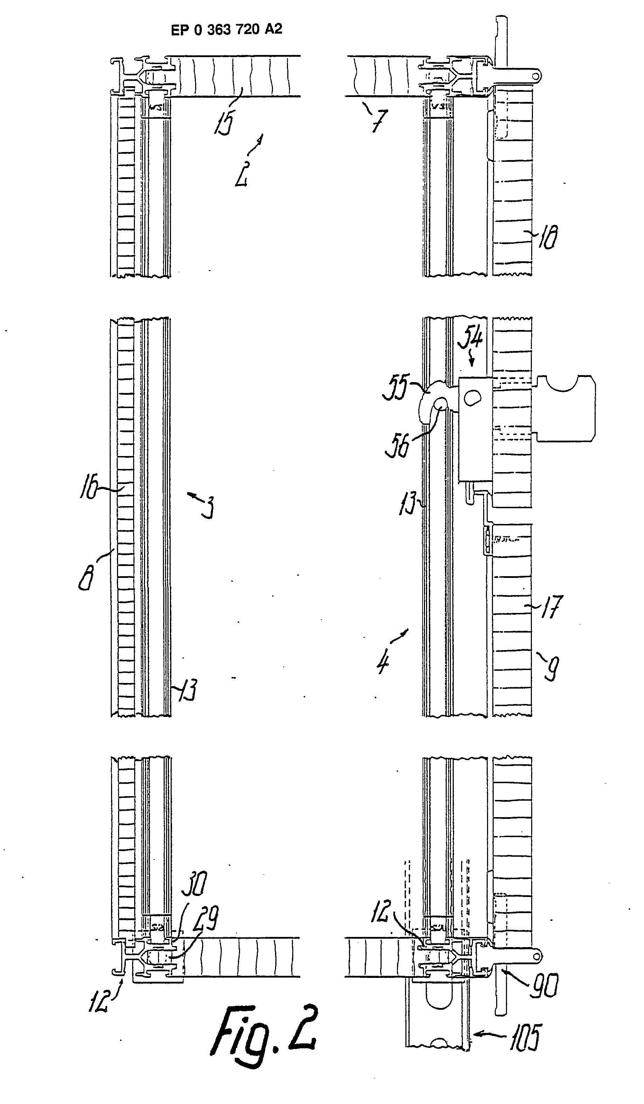

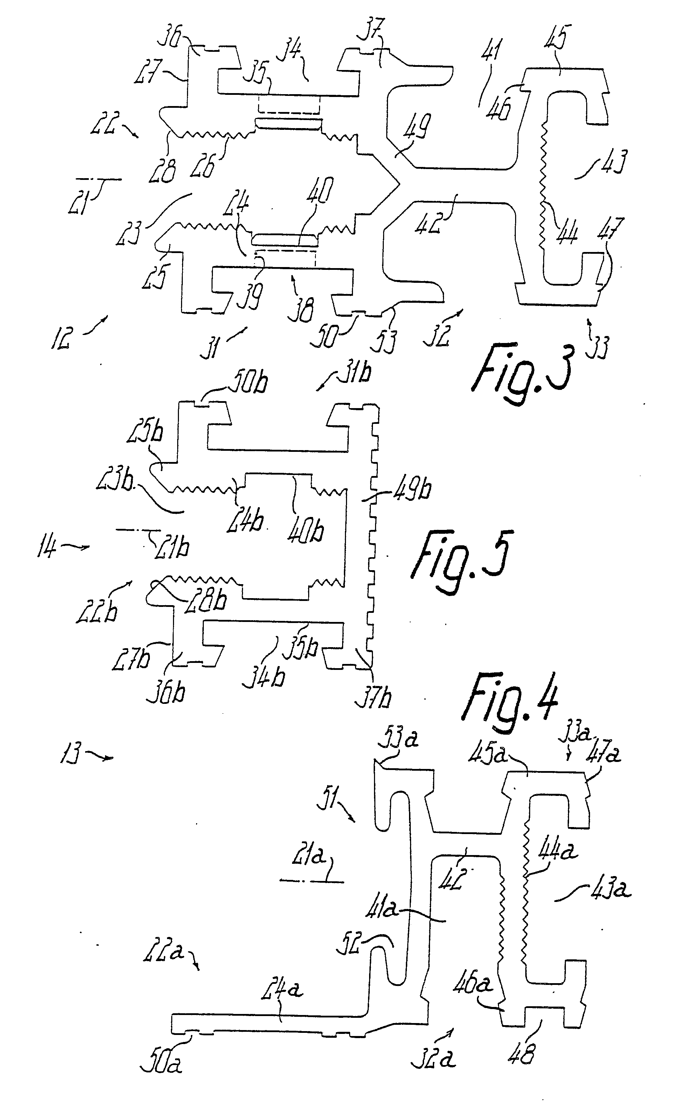

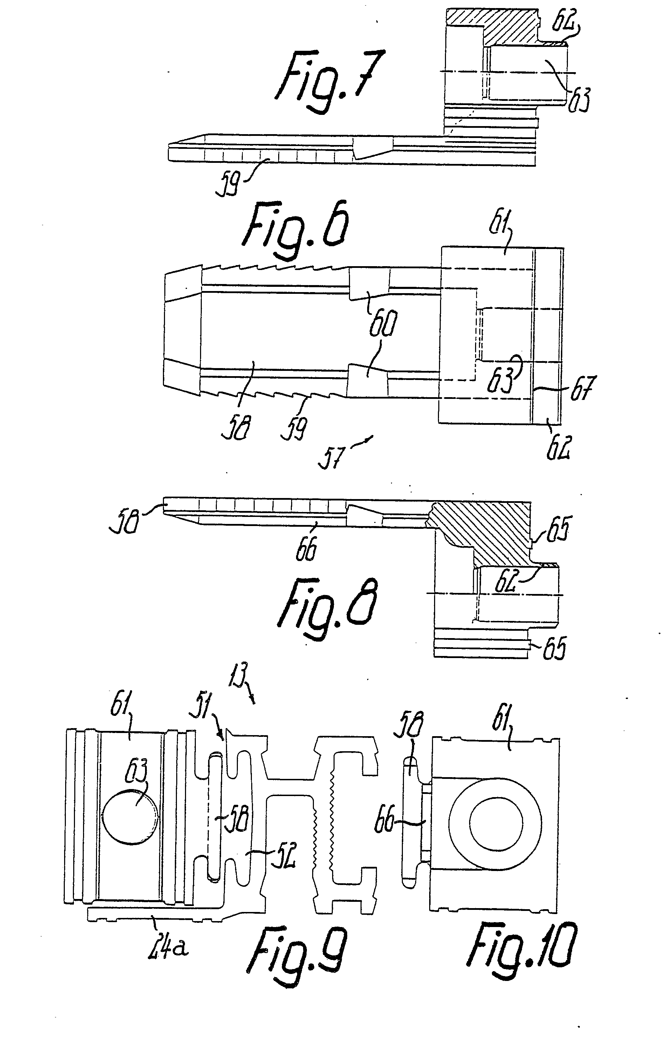

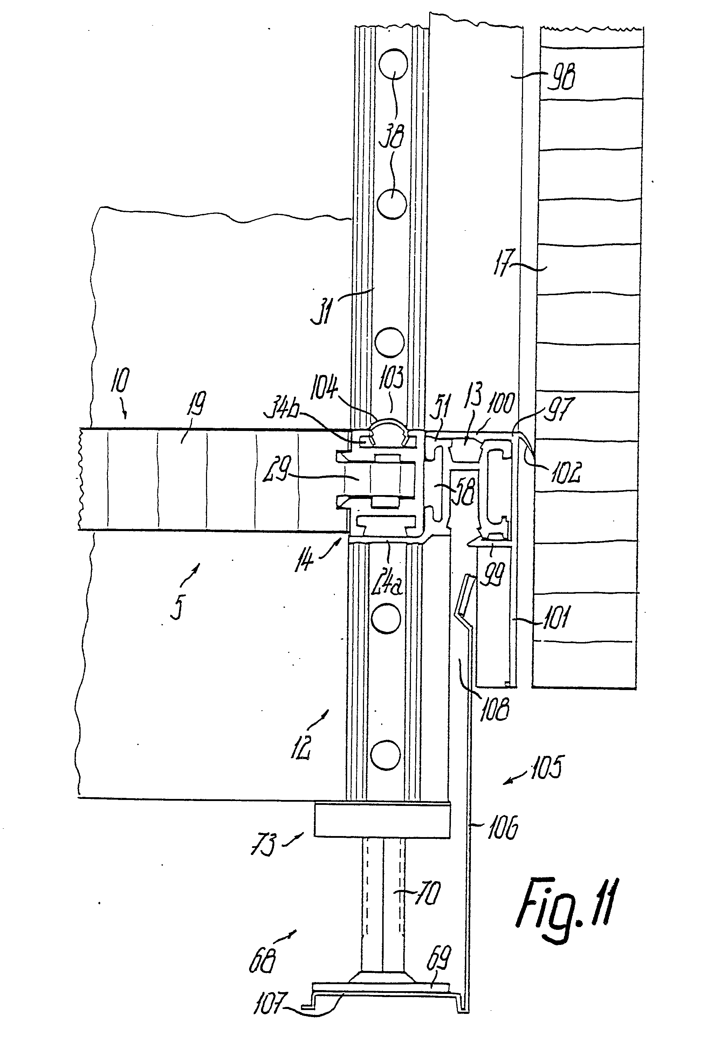

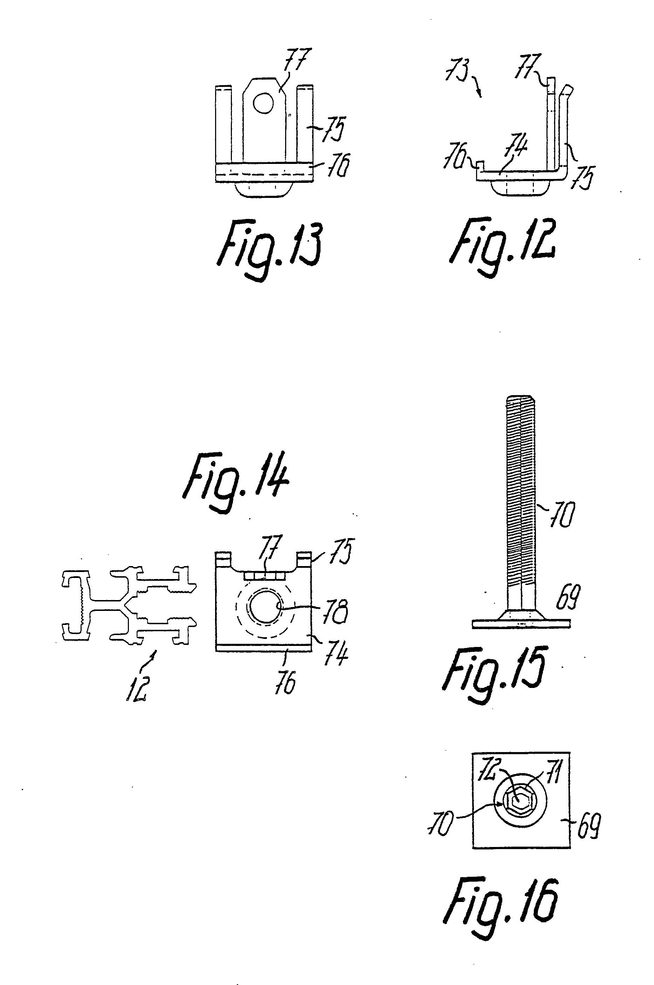

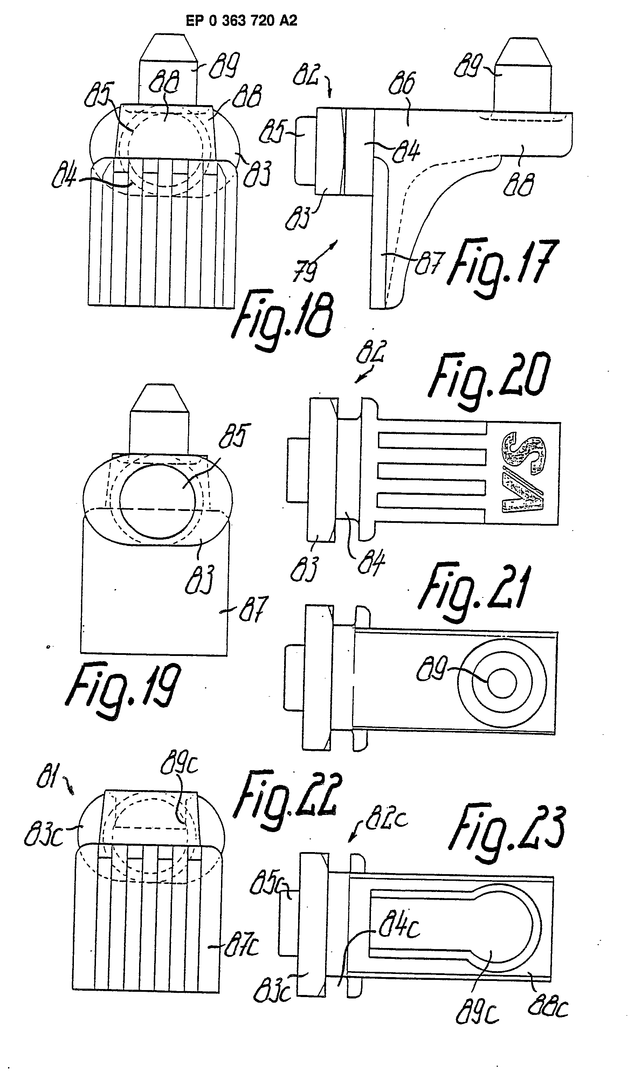

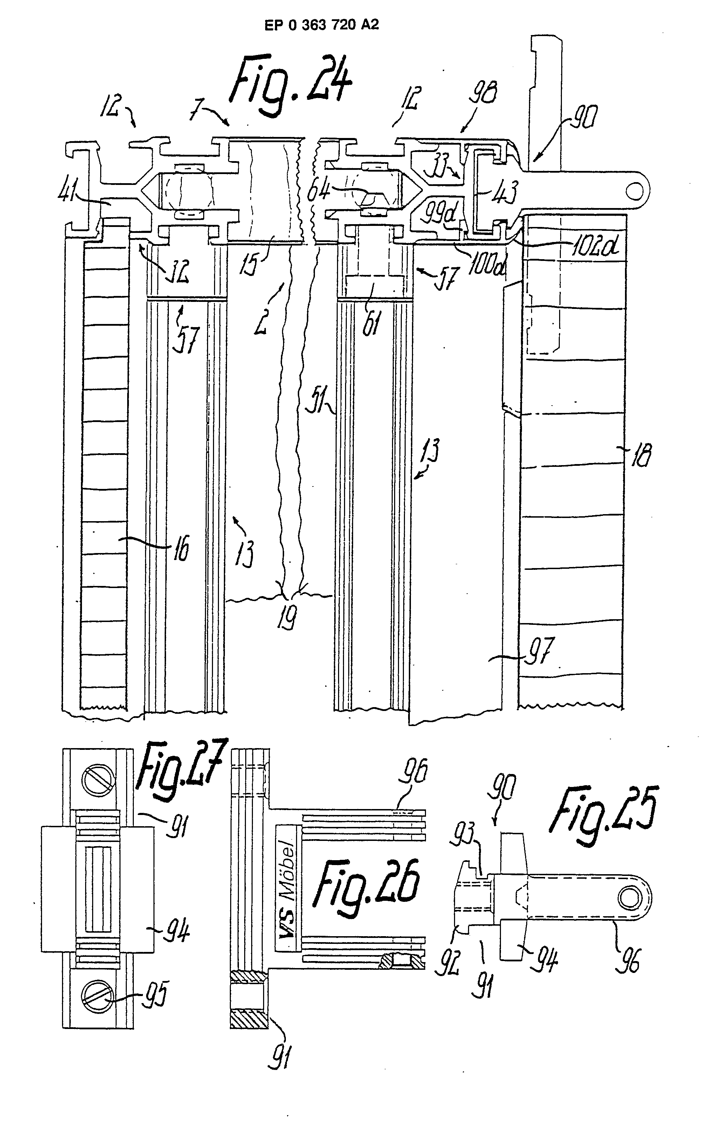

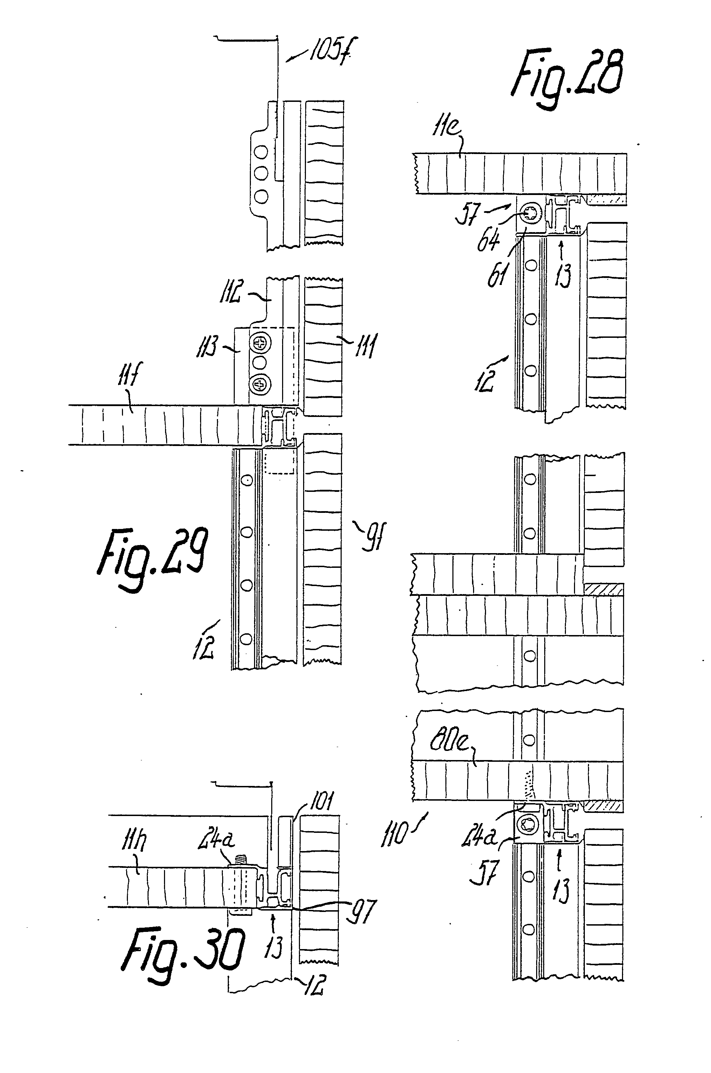

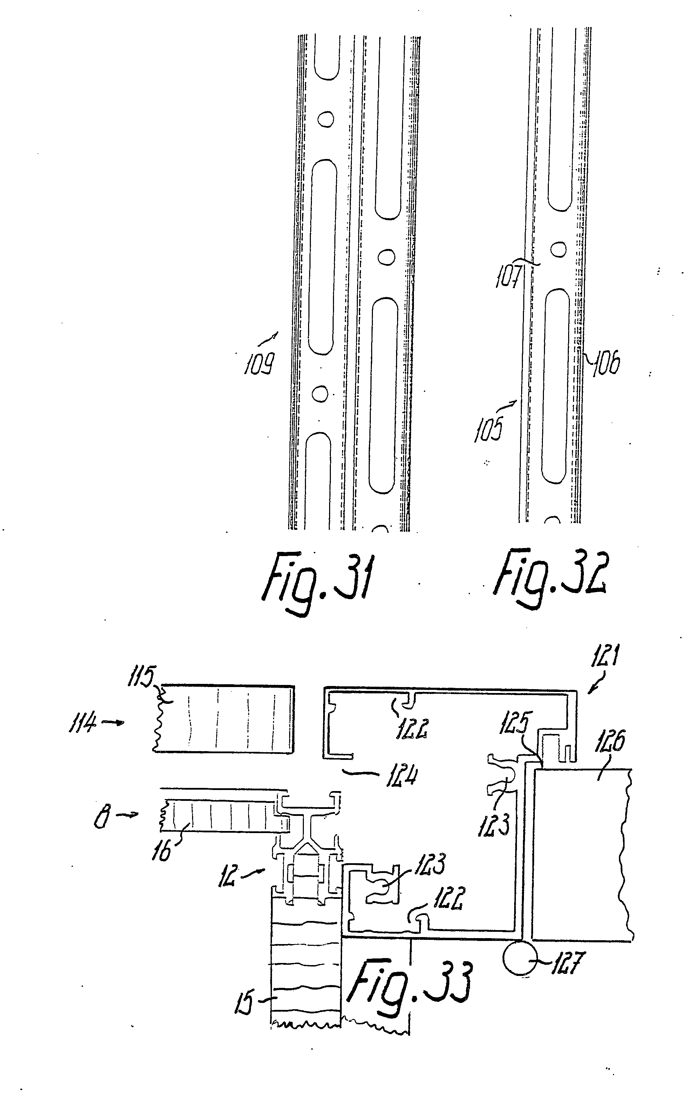

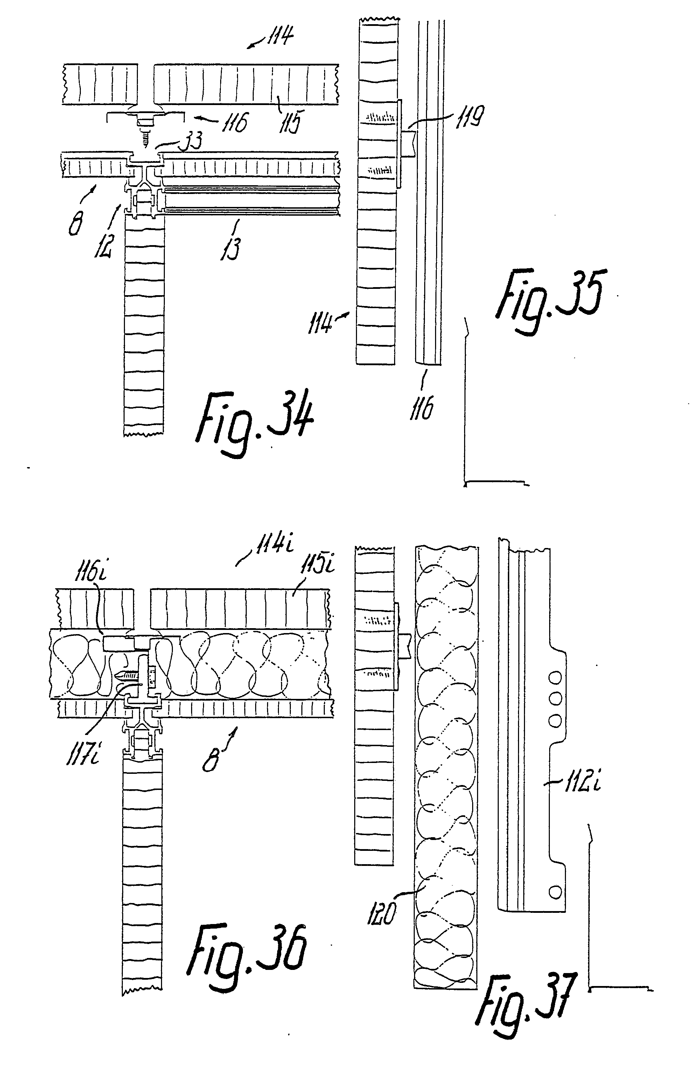

Die zerstörungsfrei und vollständig zerlegbare bzw. aus einem Bausatz aufbaubare Möbeleinheit 1 gemäß den Figuren 1 und 2 bildet einen Möbelkorpus aus vertikalen Seitenteilen 2, diese verbindenden, vertikalen hinteren und vorderen Querteilen 3, 4 sowie horizontalen unteren und oberen Querteilen 5, 6, welche die Seitenteile 2 jedoch nur im Bereich der Querteile 3, 4 und nicht zwischen diesen tragend miteinander verbinden. Die Seitenteile 2 bilden geschlossene Seitenwände 7, der Querteilteil bildet eine geschlossene Rückwand 8, der Querteil 4 eine verschließbare bzw. wenigstens teilweise zu öffnende Vorderwand 9, der Querteil 5 einen geschlossenen Sockel-Boden 10 und der Querteil 6 einen geschlossenen Decken-Boden 11.

Die gesamte Möbeleinheit 1 steht ausschließlich auf einer Mehrzahl, beispielsweise vier an ihren Ecken vorgesehenen vertikalen, gleichen Stützenprofilen 12, die mit geringem Abstand unterhalb ihrer oberen und mit geringem Abstand oberhalb ihrer unteren Enden über Traversenprofile 13 starr miteinander verbunden sind. Jeweils zwei in Breitenrichtung der Möbeleinheit 1 im Abstand nebeneinander stehende Stützenprofile 12 sind durch zwei an ihre einander zugekehrten Seitenflächen anschließende und zwischen ihnen liegende, sich in Breitenrichtung erstreckende horizontale Traversenprofile zu einem in sich tragfähigen Profilrahmen verbunden, der eine von allen horizontalen Querteilen gesonderte, in sich tragfähige Baugruppe darstellt, wobei der vordere und der hintere Profilrahmen nur über die Seitenteile 2 bzw. die Seitenwände 7 starr miteinander verbunden sind. Die horizontalen Querteile liegen lediglich lose auf und können an ihren vorderen und/oder hinteren Kanten mit Plattenkanten-Randprofilen 14 als Kantenschutz sowie zur Verstärkung versehen sein.

Das vordere und hintere Stützenprofil 12 jeder Seitenwand 7 sind durch keinerlei Rahmenteile, sondern nur durch eine Platte 15 miteinander verbunden, die diese beiden Stützenprofile an ihrer vorderen und hinteren Kante trägt. Die Rückwand 8 dagegen ist im wesentlichen durch eine Platte 16 gebildet, die innerhalb des zugehörigen Rahmens bzw. in dessen Ebene liegt und mit allen vier Randbereichen in Nuten an der Innenseite dieses Rahmens eingreift. Die Vorderwand 9 ist z.B. mit zwei Platten 17, 18 verschlossen, die unmittelbar vor dem vorderen Rahmen liegen und an diesem mit Türscharnieren angelenkt sind. Der Sockel-Boden 10 ist durch eine Platte 19 verschlossen, die in gleicher Höhe wie die unteren Traversenprofile 13 liegt, jedoch mit diesen keine Baueinheit bildet, sondern lediglich leicht lösbar zwischen diese Traversenprofile 13 und die seitlichen Platten 15 eingesetzt ist. Das gleiche gilt auch für die den Decken-Boden 11 bildende Platte 20 hinsichtlich der beiden oberen Traversenprofile 13.

In den Figuren 3 bis 5 sind ein Stützenprofil 12, ein Traversenprofil 13 sowie ein Randprofil 14 derart übereinander dargestellt, wie ihre Profilabschnitte einander hinsichtlich der Herstellung sowie der Montagelage entsprechen, wobei die drei unterschiedlichen Profile ggf. durch austauschbare Werkzeugeinsätze mit einem einzigen Extrudierwerkzeug hergestellt werden können. Jedes der drei Schrankprofile weist keinerlei geschlossene Kammern, sondern nur nutartig offene Kammern auf, was eine wesentlich vereinfachte Herstellung bei höherer Genauigkeit mit sich bringt.

Das Stützenprofil 12 ist symmetrisch zu einer in Einbaulage vertikalen, zu den Seitenteilen 2 parallelen Profilmittelebene 21 ausgebildet, so daß wahlweise das gleiche Profil im hinteren und vorderen Bereich der Möbeleinheit in um 180° zueinander verdrehten Lagen verwendet werden kann. Das Stützenprofil 12 weist an einer quer zur Profilmittelebene 21 liegenden Längsseite ein Plattenanschlußprofil 22 auf, das eine im Querschnitt im wesentlichen rechteckige Stecknut 23 begrenzt, deren Tiefe mindestens so groß wie ihre lichte Weite, insbesondere dem gegenüber etwa doppelt so groß ist. Die lichte Weite der Stecknut 23 entspricht höchstens der Hälfte der zugehörigen Profilbreite, vorzugsweise etwa einem Drittel davon. Die Stecknut 23 ist von zwei etwa parallelen, zur zugehörigen Längsseite frei ausragenden und gegenüber den zugehörigen Seitenflächen des Profiles nach innen versetzten Stecknutschenkeln 24 begrenzt, deren Enden frei vorstehende, entsprechend nach innen versetzte, kurze Schenkelfortsätze 25 bilden. An den Innenseiten sind die Stecknutschenkel 24 mit in Profillängsrichtung liegenden Zähnen einer annähernd über ihre gesamte Schenkelhöhe reichenden Zahnung 26 versehen. Über die Außenseiten der Stecknutschenkel 24 bzw. der Schenkelfortsätze 25 stehen zwei in einer gemeinsamen, zur Profilmittelebene 21 rechtwinkligen Ebene liegende Abdeckleisten 27 vor, die schulterförmig an die voneinander abgekehrten Außenseiten der Schenkelfortsätze 25 anschließen. Die offene Nutseite der Stecknut 23 ist dadurch trichterartig von einander gegenüberliegenden Einführschrägen 28 begrenzt, daß die Innenseiten der Schenkelfortsätze 25 entsprechend abgeschrägt sind.

Die Stecknut 23 dient zur Aufnahme eines Randsteges 29 (Fig. 1 und 2) der jeweiligen Platte, wobei dieser Randsteg 29 symmetrisch zur Mittelebene der Platte liegt und die Stecknut 23 im wesentlichen vollständig ausfüllt sowie durch die Zahnung 26 gegenüber dem Profil durch verpreßte Verkrallung gesichert ist. An beide Flanken des Randsteges 29 schließt eine rechtwinklig zu diesen liegende und bis zur zugehörigen Plattenaußenseite durchgehende, zurückversetzte Randkante 30 an, welche von der jeweils zugehörigen Abdeckleiste 27 ganzflächig abgedeckt wird. Die Schenkelfortsätze 25 greifen in an sie angepaßte Nuten in diesen Randkanten 30 ein, wobei diese Nuten an ihren einander zugekehrten Seiten von den Flanken des Randsteges 29 begrenzt sind. Dadurch ergibt sich eine sehr dichte Abdeckung der Plattenkante gegen Eindringen von Feuchtigkeit und Austreten von Formaldehyd, das meist in Spanplatten enthalten ist. Die Profilbreite im Bereich der Abdeckleiste 27 bzw. annähernd über die gesamte Tiefe der Stecknut 23 entspricht der Dicke der Platte, so daß die zugehörigen Außenseiten des Profiles im wesentlichen bündig mit den Plattenaußenseiten abschließen.

Das Stützenprofil 12 weist mindestens fünf Befestigungsprofile auf, von denen jeweils zwei gleiche spiegelsymmetrisch beiderseits der Profilmittelebene 21 an den Profilseiten liegen, während ein weiterer die von dem Plattenanschlußprofil 22 abgekehrte Längsseite des Profiles bildet. Beiderseits der Stecknut 23 ist jeweils ein Beschlagaufnahmeprofil 31 vorgesehen, dessen Profilbreite annähernd über die Nuttiefe der Stecknut 23 reicht. Unmittelbar benachbart zu jedem Beschlagaufnahmeprofil 31 ist ein Halterungsprofil 32 vorgesehen, das etwa gleiche Profilbreite wie das Beschlagaufnahmeprofil 31 aufweist, dessen Erstreckung rechtwinklig zur Profilmittelebene 21 jedoch größer als die der Beschlagaufnahmeprofile 31 ist. Unmittelbar im Anschluß an die beiden spiegelsymmetrischen Halterungsprofile 32 und ebenfalls mit diesem gemeinsame, quer zur Profilmittelebene 21 liegende Profilstege aufweisend, ist ein Beschlageingriffsprofil 33 vorgesehen, das annähernd über die gesamte Profilbreite reicht. Die Mittelebene des Beschlageingriffsprofiles 33 fällt mit der Profilmittelebene 21 zusammen, während die Beschlagaufnahmeprofile 31 als Mittelebene eine gemeinsame Symmetrieebene aufweisen, die rechtwinklig zur Profilmittelebene 21 liegt. Auch die gemeinsamen Mittelebenen der Halterungsprofile 32 liegen rechtwinklig zur Profilmittelebene 21, jedoch sind die Halterungsprofile 32 asymmetrisch zu dieser Mittelebene ausgebildet.

Jedes Beschlagaufnahmeprofil 31 bildet im wesentlichen eine hinterschnittene Beschlagaufnahmenut 34 nach Art einer T-Nut, deren gegenüber der Tiefe der Stecknut 23 nur geringfügig kleinere Nutbreite wesentlich größer als ihre Nuttiefe ist. Die zueinander sowie zu den Flanken der Stecknut 23 parallelen Bodenflächen 35 der Beschlagaufnahmenuten 34 sind durch die voneinander abgekehrten Außenseite der Stecknutschenkel 24 gebildet, über welche benachbart zum jeweiligen Schenkelfortsatz 25 ein Winkelschenkel 36 und in Höhe des Bodenbereiches der Stecknut 23 ein T-Schenkel 37 derart vorsteht, daß diese Schenkel die jeweils zugehörige Beschlagaufnahmenut 34 begrenzen.

In der Bodenfläche 35 der als Organisationsnut vorgesehenen Beschlagaufnahmenut 34 sind symmetrisch zu ihrer Mittelebene und in Profillängsrichtung in Rasterabständen hintereinander Rastglieder 38 vorgesehen, die durch eingeprägte, zylindrische Vertiefungen 39 gebildet sind, deren Bodenflächen gegenüber den einander zugekehrten Innenseiten der Stecknutschenkel 24 bzw. gegenüber den Flanken der Stecknut 23 nach außen versetzt sind. Im Bereich der Rastglieder 38 weisen die Stecknutschenkel 24 an ihren Innenseiten durchgehende Längsnuten auf, deren Nutbreite mindestens so groß wie die lichte Weite der Rastvertiefungen 39 ist und die die Zahnung 26 derart unterbrechen, daß beiderseits jeder Nut 40 Abschnitte der Zahnung 26 liegen. Durch das Einprägen der Rastvertiefungen 39 entstehen an den Innenseiten der Stecknutschenkel 24 noppenartige Vorsprünge, die im wesentlichen nur innerhalb der Nuten 40 liegen und so weit vorstehen können, daß auch sie an den Flanken des Randsteges 29 anliegen bzw. zahnnoppenartig verkrallt in den Randsteg 29 eingreifen, so daß auch diese Noppen zur Verbindung mit der Platte beitragen, jedoch nicht über die Zahnungen 26 nach innen vorstehen. Durch die beschriebene Ausbildung ist ein im wesentlichen U-förmiges Plattenanschlußprofil 22 mit an den Außenseiten seiner Profilschenkel liegenden, für einen formschlüssigen Eingriff geeigneten Längsprofilen, nämlich den Beschlagaufnahmeprofilen 31, gebildet.

Das Beschlageingriffsprofil 33 ist mit dem Plattenanschlußprofil 22 lediglich durch einen einzigen, in der Profilmittelebene 21 liegenden Mittelsteg 42 verbunden, der einerseits an den U-Quersteg 49 des Plattenanschlußprofiles 22 mit einer kleinen Gabelung und andererseits an einen quer zur Profilmittelebene 21 liegenden Bodensteg des Beschlageingriffsprofiles 33 anschließt. Dadurch bildet der Mittelsteg 42 den Bodensteg zweier Halterungsnuten 41 der beiden Halterungsprofile 32, deren Nuttiefe wesentlich größer als die der Beschlagaufnahmenuten 34, deren Nutbreite jedoch etwa gleich wie die dieser Beschlagaufnahmenuten 34 ist. Jede Halterungsnut 41 ist im wesentlichen nur an einer, nämlich der vom U-Quersteg 49 begrenzten Flanke durch den T-Kopfsteg des zugehörigen T-Schenkels 37 hinterschnitten, so daß die Nutöffnung seitlich gegenüber der zugehörigen Nutmittelebene versetzt ist.

Das Beschlageingriffsprofil 33 ist im wesentlichen durch einen C-förmigen Profilteil gebildet, der eine hinterschnittene, nämlich annähernd T-förmige Beschlageingriffsnut 43 begrenzt, deren Nutöffnung an der vom Plattenanschlußprofil 22 abgekehrten Profillängsseite symmetrisch zur Plattenmittelebene 21 offen ist. Der Bodensteg dieses Profilabschnittes begrenzt die Halterungsnuten 41 an den zugehörigen Flanken und weist eine längsgerillte Bodenfläche 44 für die Beschlageingriffsnut 43 auf, deren lichte Breite wesentlich größer als ihre Nuttiefe und auch größer als die Breite der Stecknut 23, der Beschlagaufnahmenut 34 oder der Halterungsnut 41 ist.

Die Seitenflächen des Stützenprofiles 12 sind im Bereich der Halterungsprofile 32 und des Beschlageingriffsprofiles 33 gegenüber den Bereichen des Plattenanschlußprofiles 22 bzw. der Beschlagaufnahmeprofile 31 geringfügig, nämlich etwa um die Dicke von Verkleidungsprofilen, zurückversetzt. Für die Befestigung dieser Verkleidungsprofile bilden die an diesen Seitenflächen liegenden, U-förmig mit ihren Schenkeln gegeneinander gerichteten Abschnitte des Beschlageingriffsprofiles 33 jeweils einen Clipskopf 45, der dafür geeignet ist, an den voneinander abgekehrten Flanken des Bodensteges und der gegeneinander gerichtet frei ausragenden Endstege des Beschlageingriffsprofiles 33 von entsprechenden Gegengliedern des Verkleidungsprofiles o.dgl. rastend umgriffen zu werden. Zu diesem Zweck bildet jeder Clipskopf 45 an jeder Flanke eine zahnartig vorstehende Rastnase 46 bzw. 47, wobei die Rastnase 46 in der zugehörigen Flanke der benachbarten Halterungsnut 41 liegt und somit an dieser Flanke der Halterungsnut ebenfalls eine Art Hinterschneidung bilden kann. Die Längsrillung der Bodenfläche 44 ist außer zur Aufnahme von Spannschrauben unter geringfügiger plastischer Verformung auch dafür geeignet, für eine Lackierung eine besonders gute Grundfläche zu bilden.

Beiderseits der Beschlagaufnahmenuten 34 sind an den Seitenflanken des Stützenprofiles 12 sehr flache und schmale Ausrichtnuten bzw. durch diese gebildete Ausrichtstege vorgesehen, die an den voneinander abgekehrten Seiten der Winkelschenkel 36 und der T-Schenkel 37 liegen und für den Eingriff von entsprechenden, beispielsweise stegförmigen Vorsprüngen von Beschlagteilen o.dgl. geeignet sind, welche in die Beschlagaufnahmenut 34 eingreifen und das Beschlagaufnahmeprofil 31 außen übergreifen. Die für die Aufnahme der Verkleidungsprofile o.dgl. zurückversetzten Seitenflächen gehen über schräge Anschlußflanken 53 in die nicht zurückversetzten Bereiche über.

Das Randprofil 14 weist im wesentlichen das gleiche Plattenanschlußprofil 22b wie das Stützenprofil 12 auf, weshalb in Fig. 5 für einander entsprechende Teile die gleichen Bezugszeichen wie in Fig. 3, jedoch mit dem Index "b" verwendet sind, wobei die entsprechenden Beschreibungsteile sinngemäß gelten. Der Profilquersteg des Randprofiles 14 bildet einen an seiner Außenseite längsgerillten Decksteg 49b, der als Plattenkante vorgesehen ist. Die Abmessungen, Ausbildungen und Lagen der Beschlagaufnahmeprofile 31b sind dieselben wie beim Stützenprofil 12, so daß sie praktisch über Eck fortlaufend aneinander anschließen können. Auch das Randprofil 14 kann mit Rastgliedern gemäß Fig. 3 versehen sein, jedoch sind diese in Fig. 5 der Einfachheit halber nicht dargestellt.

Das Traversenprofil 13 gemäß Fig. 4 weist praktisch das gleiche Beschlageingriffsprofil 33a wie das Stützenprofil 12 auf. Wie Fig. 4 zeigt, kann im Bereich des Beschlageingriffsprofiles 33a an mindestens einer Seitenflanke des Stangprofiles, nämlich im zugehörigen Clipskopf, noch eine Längsnut 48 vorgesehen sein. Das Beschlageingriffsprofil 33a ist über einen gegenüber seiner Mittelebene 21a seitlich versetzten Mittelsteg 42a mit einem ebenfalls annähernd C-förmigen Verbindungsprofil 51 verbunden, das flacher als das Beschlageingriffsprofil 33a und von diesem abgewendet ist. Zwischen den beiden C-Profilen sind Halterungsprofile 32a vorgesehen, deren Halterungsnuten 41a seitlich von den Bodenstegen der C-Profile und deren Nutböden durch den Mittelsteg 42a begrenzt sind, wobei jedoch die unterschiedlich tiefen Halterungsnuten 41a über ihre gesamte Nuttiefe eine Nutbreite haben, die nur etwa der Breite der Nutöffnungen der Halterungsnuten 41 des Stützenprofiles 12 entspricht. Schließen die Beschlageingriffsprofile 33, 33a eines Stützenprofiles 12 und eines Traversenprofiles 13 im Winkel aneinander an, so schließen auch ihre Halterungsnuten 41, 41a im Winkel so aneinander an, daß sie im Winkel zueinander liegende Plattenkanten bzw. entsprechende, abgesetzte Randstege dieser Plattenkanten rahmenartig aufnehmen können. Mindestens eine Nutflanke wenigstens einer Halterungsnut 41a kann ebenfalls gezahnt sein.

Das Verbindungsprofil 51 bildet eine hinterschnittene, zur Mittelebene 21a symmetrische, beispielsweise T-förmige Profilnut 52, deren Breite zwar gleich derjenigen der Beschlageingriffsnut 43a, deren Nuttiefe jedoch kleiner als die der Beschlageingriffsnut 43a ist. Das Traversenprofil 13 weist somit einen annähernd H-förmigen Profilabschnitt auf, der an den voneinander abgekehrten Seiten seiner H-Schenkel mit für den formschlüssigen Eingriff geeigneten Längsprofilen versehen ist. Von diesem Profilabschnitt bzw. von dem vom Mittelsteg 42a weiter entfernten Ende des das Verbindungsprofil 51 bildenden H-Schenkels steht ein Profilauflager 22a etwa parallel zur Mittelebene 21a so ab, daß er über die offene Seite des Verbindungsprofiles 51 rechtwinklig vorsteht. Nimmt man die Bodenfläche 44a des Beschlageingriffsprofiles 33a als Bezugsebene, so liegt das freie Ende des Auflageschenkels 24a in einem Abstand von dieser Bezugsebene, der höchstens so groß wie der Abstand der Schenkelenden der Stecknutschenkel 24 des Stützenprofiles 12 von der entsprechenden Bezugsebene, insbesondere demgegenüber mindestens um die Höhe der Schenkelfortsätze 25 kleiner ist. Der Abstand der offenen bzw. vom Beschlageingriffsprofil 33a abgekehrten Seite des Verbindungsprofiles 51 von der Bodenfläche 44a ist geringfügig kleiner als der Abstand zwischen der Abdeckleiste 27 und der Bodenfläche 44 des Stützenprofiles 12 abzüglich des Abstandes der Abdeckleiste 27b und der davon abgekehrten Außenseite des Quersteges 49b des Randprofiles 14, so daß im montierten Zustand diese Außenseite des Randprofiles 14 nahezu lückenfrei an die offene Seite des Verbindungsprofiles 51 anschließen kann. Der Abstand der der Mittelebene 21a zugekehrten Auflagerfläche des Auflagerschenkels 24a von der Mittelebene 21a entspricht etwa der Hälfte der Profilbreite des Stützenprofiles 12 bzw. des Randprofiles 14, so daß sich eine entsprechende fluchtende Auflage ergibt. Dadurch ist die Profilbreite des Traversenprofiles 13 im Bereich des Beschlageingriffsprofiles 33a geringfügig größer als die des Stützenprofiles 12, was dur die die Nut 48 seitlich begrenzenden Längsstege ausgeglichen wird.

Wie Fig. 2 ferner zeigt, können die beiden Tür-Platten 17, 18 mit einer in eine Platte 18 eingelassenen Schließvorrichtung mit Hilfe eines Schlüssels gegeneinander verriegelt sowie gegenüber dem Möbelkorpus gesichert werden. Zu diesem Zweck weist die Schließvorrichtung 54 am unteren und oberen Ende einer vertikalen Drehstange jeweils einen Fanghaken 55 auf, der im Schließzustand in einen Fanghaken-Bolzen 56 des Möbelkorpus eingreift. Gemäß der Erfindung ist derjeweilige Bolzen am zugehörigen Traversenprofil 13 beispielsweise durch Einschrauben befestigt, wodurch ein wesentlich sicherer und dauerhafterer Halt erreicht wird, als wenn der Bolzen in einer Platte befestigt wäre.

In den Figuren 6 bis 10 ist ein als Traversenverbinder 57 vorgesehener Beschlagteil zur Verbindung eines Endes eines Traversenprofiles 13 mit einem Stützenprofil 12 zwischen dessen Enden dargestellt, wobei in Fig. 9 nach Art einer explodierten Darstellung auch das Traversenprofil 13 angedeutet ist. Der Traversenverbinder 57 weist ein eng an die Profilnut 52 des Traversenprofiles 13 angepaßtes Steckschwert 58 auf, das nach Art eines T-förmigen Schlittenprofiles über beide Enden so durchgeht, daß es durch das Verbindungsprofil 51 über dessen ganze Länge hindurchgeschoben und an jedem beliebigen Längsabschnitt des Traversenprofiles gegenüber diesem gesichert bzw. mit seinem hinteren Ende bündig mit dem Traversenprofil abschließen kann. Das beispielsweise nach Art eines Preßsitzes in das Verbindungsprofil 51 eintreibbare Steckschwert 58 weist sägezahnförmig gezahnte Längskanten 59 auf, die in die hinterschnitten liegenden Seitenbegrenzungen der Profilnut 52 krallenartig eingreifen. An seiner der Nutöffnung der Profilnut 52 zugehörigen und diese Nutöffnung mit einem Profilband im wesentlichen vollständig ausfüllenden Seite weist das Steckschwert beiderseits seitlich einander gegenüberliegende Aufnahmen 60 in Form von bis an die in diesem Bereich nicht gezahnten Längskanten 59 reichenden Vertiefungen auf, in welche Nocken des Traversenprofiles 13 zur zusätzlichen Sicherung gegen Längsverschiebungen formschlüssig eingreifen können, die aus den gegeneinander gerichteten C-Schenkeln des Verbindungsprofiles 51 durch Verformung herausgedrückt werden, so daß zur Befestigung des Traversenverbinders 57 an dem Traversenprofil 13 keinerlei gesonderte Befestigungsglieder erforderlich sind. Das Steckschwert 57 ist seitlich an eine Außenseite eines einteilig mit ihm ausgebildeten Spannkopfes 61 über sein Profilband 66 so angesetzt, daß sein hinteres Ende bündig mit der zugehörigen Endfläche 67 des annähernd rechtwinklig begrenzten Spannkopfes 61 abschließt. Über diese Endfläche 67 steht ein an die Nutöffnung des Beschlagaufnahmeprofiles 31 sowie an die Tiefe der Beschlagaufnahmenut 34 angepaßter Eingriffssteg 62 vor, dessen Mittelebene parallel zur Schwertebene des Steckschwertes 58 sowie gegenüber dem Steckschwert 58 versetzt liegt. Der Spannkopf 61 ist von einer auch den Eingriffssteg 62 etwa in der Mitte von dessen Länge durchsetzenden Durchgangsöffnung 63 in Form einer Senkbohrung durchsetzt, deren Mittelachse parallel zur Schwertlängsrichtung liegt. Beiderseits des Eingriffssteges 62 stehen zumindest über die Endfläche 67 Ausrichtstege 65 vor, die nach Lage und Form an die Ausrichtnuten 50 des Stützenprofiles 12 angepaßt sind. In die Durchgangsöffnung 63 ist eine in Fig. 28 erkennbare Schraube 64 eingesetzt, die zweckmäßig durch eine selbstschneidende Senkkopfschraube gebildet ist, so daß die Durchgangsöffnung 63 nicht zuvor mit einem Gewinde versehen werden muß, sondern die Schraube 64 in die Durchgangsöffnung 63 so eingeschraubt werden kann, daß sie von selbst gesichert an dem Traversenverbinder 57 gehalten ist. Der mit dem Traversenprofil 13 verbundene Traversenverbinder 57 wird mit seinem Eingriffssteg 62 in die zugehörige Beschlagaufnahmenut 34 eines Stützenprofiles 12 nahezu bis zur Anlage an der Bodenfläche 35 eingesetzt, wonach die selbstschneidende Schraube 64 in den zugehörigen Stecknutschenkel 24 zweckmäßig im Bereich einer Rastvertiefung 39 eingeschraubt wird. Dabei kann die Schraube 64 über die Innenseite des Stecknutschenkels 24 austreten und in den Randsteg 29 der Platte ungehindert hineinragen. Der Auflagerschenkel 24a liegt dabei unmittelbar benachbart zur zugehörigen, quer zum Steckschwert 58 liegenden Außenseite des Spannkopfes 61, überlappt also diesen Spannkopf 61 bis zum Anschluß an das Stützenprofil 12 und dient gleichzeitig zur Kippsicherung des Traversenprofiles 13 gegenüber dem Traversenverbinder 57 dadurch, daß der Spannkopf 61 mit Außenflächen in eine winkelförmige Aufnahme des Traversenprofiles 13 eng eingreift.

Wie insbesondere die Figuren 1 und 11 bis 16 zeigen, steht die Möbeleinheit auf in ihren Eckbereichen vorgesehenen Stütz-Füssen 68, die praktisch Bestandteile der vorderen und hinteren Rahmen bzw. der Seitenteile 2 bilden und die unteren Enden der Stützprofile 12 tragen. Entsprechende Füsse können auch umgekehrt an den oberen Enden zur Abstützung gegenüber einer Raumdecke vorgesehen sein. Jeder Stütz-Fuß 68 weist zur Bodenabstützung eine Fußplatte 69 und eine an dieser mit ihrem unten liegenden Nietkopf drehbar, jedoch axial gesichert gelagerte Stellspindel 70 auf, die annähernd über ihre gesamte Länge bzw. nahezu bis an die Fußplatte 69 reichend einerseits mit einem Außengewinde und andererseits mit Schlüsselflächen 71 nach Art eines Sechskantprofiles versehen ist, das bis zur Fußplatte 69 reicht, so daß also die Gewindewendel durch die Schlüsselflächen 71 im Querschnitt polygonal abgeflacht ist. An dem von der Fußplatte 69 abgekehrten Ende weist die Stellspindel 70 ein weiteres Eingriffsglied für ein Werkzeug, nämlich z.B. einen Innensechskant 72, auf. Die Stellspindel 70 ist in einem als Stanzbiegeteil aus Blech gefertigten und in Fig. 11 vereinfacht dargestellten Fußlager 73 mit Gewinde gelagert, wobei das Fußlager 73 lediglich durch Aufstecken so befestigt sein kann, daß die Stützkräfte durch Anschlagbegrenzung des Steckeingriffes aufgenommen werden. Zu diesem Zweck ist das Fußlager 73 annähernd U-förmig mit einem für die anschlagbegrenzte Anlage am zugehörigen Ende des Stützenprofiles 12 bestimmten Quersteg 74 ausgebildet, von dem ein gegabelter langer Schenkel 75 und ein über die Breite des Fußlagers 73 durchgehender, sehr kurzer Schenkel 76 absteht.

Der lichte Abstand zwischen den Schenkeln entspricht der Profilbreite des Stützenprofiles im Bereich des Plattenanschlußprofiles 22 bzw. der Plattendicke der für die Seitenteile 2 verwendeten Platten 15. Zwischen den Einzelschenkeln des Schenkels 75 ist eine geringfügig nach innen versetzte, ebenfalls vom Quersteg 74 abgewinkelte Steckzunge 77 vorgesehen, die eng an die Beschlagaufnahmenut 34 des Stützenprofiles 12 angepaßt ist und in diese eingreift. Durch die Steckzunge 77 ist das Fußlager 73 gegen seitliche Bewegungen gesichert bzw. seitlich genau ausgerichtet, während es durch die Schenkel 75, 76 gegen Querbewegungen zur Platte formschlüssig bzw. spielfrei gesichert ist, wobei die Schenkel 75 nach Art von Federschenkeln mit einer geringen Vorspannung anliegen können. Im Quersteg 74 ist ein Spindelgewinde 78 in Form eines Innengewindes vorgesehen, das in einem aus dem Quersteg 74 herausgeformten Kragen so liegt, daß die Stellspindel 70 im montierten Zustand in das Plattenanschlußprofil 72 zwischen den Nuten 40 eingreift. Der zwischen dem Fußlager 73 und der Fußplatte 69 frei liegende Teil der Stellspindel 70 ist über seine gesamte Länge zur Drehbetätigung der Stellspindel 70 und damit zur Höhenverstellung des Stütz-Fusses 68 zugänglich.

Wie insbesondere die Figuren 1 und 17 bis 23 zeigen, sind für Zwischen-Böden 80, die durch Holz- bzw. Spanplatten, durch abgekantete Blechplatten aus Aluminium oder ähnlichem bestehen können sowie für ähnliche Innenausbau-Zubehörteile für die Möbeleinheit 1 Bodenträger 79, 81 vorgesehen, welche insbesondere so im Bereich der Rastglieder 38 in den Beschlagaufnahmeprofilen 31 der Stützenprofile 12 so anzubringen sind, daß sie auch in Höhenrichtung formschlüssig gesichert sind. Der in Seitenansicht einen annähernd winkelförmigen Trägerkörper 86 aufweisende Bodenträger 79 ist an der Außenseite eines Trägerschenkels 87 etwa in Verlängerung des anderen Trägerschenkels 88 mit einem Schwenkriegel 82 versehen, der einen in Ansicht gemäß Fig. 19 länglichen Riegelkopf 83 aufweist, dessen Breite an die Breite der Nutöffnung des Beschlagaufnahmeprofiles 31 und dessen durch annähernd halbkreisförmig abgerundete Enden begrenzte Länge eng an die lichte Weite der Beschlagaufnahmenut 34 angepaßt sind. Der Riegelkopf 89 begrenzt mit seiner dem Trägerkörper 86 zugekehrten Seite eine Riegelnut 84, die eng an die gegeneinander gerichteten Schenkel des Winkelschenkels 36 und des T-Schenkels 37 des Stützenprofiles 12 angepaßt ist, wobei außerdem die Dicke des Riegelkopfes 83 an die lichte Höhe des breiteren Bereiches der Beschlagaufnahmenut 34 angepaßt ist. Über die vom Trägerkörper 86 abgekehrte Außenseite des Riegelkopfes 83 steht ein Rastzapfen 85 vor, der an die Rastvertiefungen 39 des Stützenprofiles 12 bzw. des Randprofiles 14 angepaßt ist. Der Riegelkopf 83 kann in einer Schwenklage in die Beschlagaufnahmenut 34 bis zum Eingriff des Rastzapfens 85 in eine Rastvertiefung 39 eingeführt und dann durch Drehen um 90° hintergreifend gesichert werden, wobei flach angeschrägte, durch den Riegelkopf 83 gebildete Flankenzonen der Riegel nut 84 zu einer Verspannung des Trägerschenkels 87 gegenüber der Außenseite des Stützenprofiles 12 bzw. der Schenkel 36, 37 des Beschlagaufnahmeprofiles 31 führen. In dieser Sicherungslage ragt der andere Trägerschenkel 88 frei von der zugehörigen Seitenfläche des Stützenprofiles 12 ab, wobei seine Oberseite eine Auflagerfläche für die leicht lösbare bzw. abhebbare Anordnung des Bodens 80 bildet. An der Oberseite dieses Trägerschenkels 88 kann ein Sicherungsglied 89 in Form beispielsweise eines nach oben stehenden Sicherungszapfens vorgesehen sein, der in eine entsprechende Bohrung o.dgl. an der Unterseite des Bodens 80 eingreift. Im Übergangsbereich in den Trägerkörper 86 ist das Sicherungsglied 89 zweckmäßig von einer rinnenförmigen Vertiefung in der Oberseite des Trägerkörpers 86 umgeben, so daß eventuelle Verschmutzungen trotz enger Anpassung des Sicherungszapfens an die Bohrung des Bodens nicht die Auflage stören.

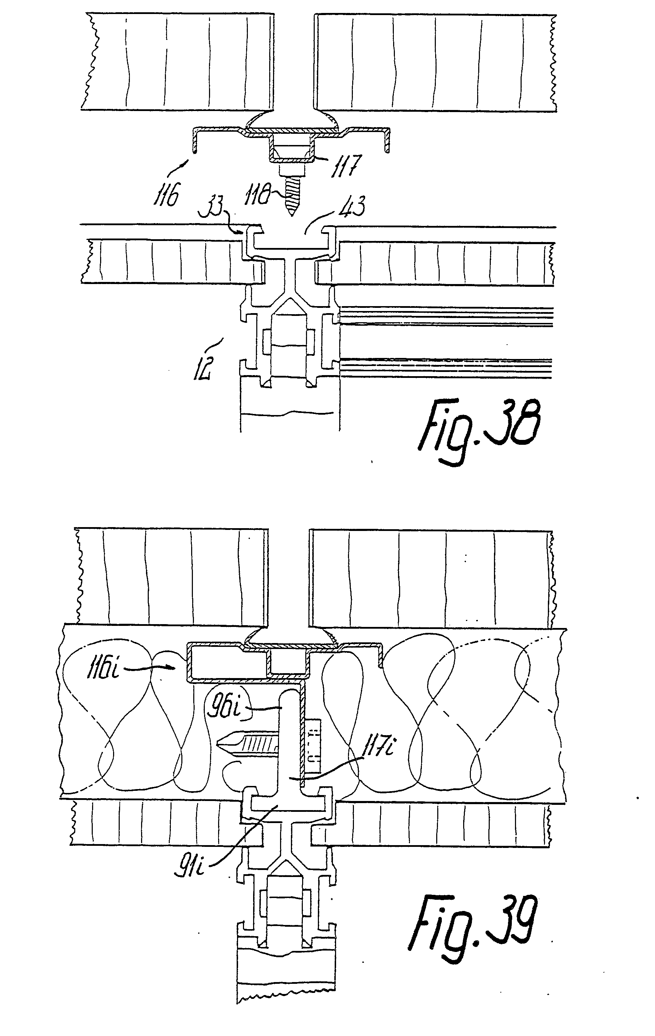

Der Bodenträger 81 gemäß den Figuren 22 und 23 unterscheidet sich von dem Bodenträger 79 im wesentlichen nur dadurch, daß als Sicherungsglied 89c an der Oberseite des Trägerschenkels 88c eine annähernd über dessen ganze Länge reichende Vertiefung vorgesehen ist, in welche ein entsprechend nach unten vorstehendes Gegenglied eingreifen kann, die jedoch auch zu einem geringeren Materialaufwand führt. Zweckmäßig werden je Boden 80 zwei Bodenträger 79 und zwei Bodenträger 81 verwendet. Ansonsten sind in den Figuren 22 und 23 für einander entsprechende Teile die gleichen Bezugszeichen wie in den Figuren 17 bis 21, jedoch mit dem Index "c" verwendet. Tragbeschläge mit Schwenkriegeln 82 bzw. 82c gemäß den Figuren 17 bis 23 können auch für andere Zwecke vorgesehen werden, wobei in jedem Fall der Schwenkriegel eine sichere und einfach in der Höhe zu verstellende Befestigung ermöglicht.

Aus den Figuren 24 bis 27 ist ein Beschlagträger 90 zur Befestigung am Beschlageingriffsprofil 33 des jeweiligen Stützenprofiles 12 erkennbar, der in Fig. 24 vereinfacht und in den Figuren 25 bis 27 detaillierter dargestellt ist. Der Beschlagträger 90 weist ein im Querschnitt annähernd T-förmiges Trägereingriffsglied 91 auf, das seitlich beiderseits über einen nach außen aus dem Beschlageingriffsprofil 33 vorstehenden Beschlagkörper 96 mit Endabschnitten vorsteht und in diesen Endabschnitten Gewindebohrungen für versenkt liegende Spannschrauben 95 aufweist. Das nahezu vollständig innerhalb des Beschlageingriffsprofiles 33 liegende Trägereingriffsglied 91 bildet mit seinem T-Quersteg einen Eingriffskopf 92, der verhältnismäßig eng an den Innenquerschnitt des weiteren Bereiches der Beschlageingriffsnut 43 angepaßt, jedoch gegenüber deren Mittelebene asymmetrisch ausgebildet ist. Ein Schenkel des T-Quersteges ist an der Außenseite mit einer Abschrägung und an der Innenseite mit einer abgestuften Fläche versehen, von denen die eine Stufe eine Seitenflanke einer Seitennut 93 bildet, die im T-Fußsteg vorgesehen und an die frei gegeneinander gerichteten Schenkel des Beschlageingriffsprofiles 33 angepaßt ist. Die andere Stufe liegt in einer Ebene mit einer entsprechenden Schulterfläche des anderen Schenkels des T-Quersteges, so daß diese Stufe und die Schulterfläche Stützflächen zur Abstützung an den Innenseiten der gegeneinander gerichteten Schenkel des Beschlageingriffsprofiles 33 bilden. Die Schrauben werden gegen die gerillte Bodenfläche 44 verspannt, so daß der Beschlagträger 90 formsteif gesichert ist. Zum Lösen werden die Spannschrauben 95 entspannt, wonach das Trägereingriffsglied 91 seitlich derart verschoben werden kann, daß ein Profilschenkel des Beschlageingriffsprofiles 33 in die Seitennut 93 eingreift, wonach der gegenüberliegende Schenkel des Eingriffskopfes 92 durch Schwenken des gesamten Beschlagträgers 90 quer aus dem Beschlageingriffsprofil 33 dadurch herausgeschwenkt werden kann, daß durch die Abschrägung des Eingriffskopfes 92 eine solche Schwenkbewegung nicht behindert ist. Entsprechend umgekehrt wird der Beschlagträger 90 eingesetzt und montiert. Im dargestellten Ausführungsbeispiel weist der Beschlagträger 90 einen gabelförmigen Beschlagkörper 96 auf, zwischen dessen Gabelarme ein beispielsweise mit der Platte 18 verbundener Scharnierkörper eingreift, wobei der Scharnierkörper und die Gabelarme in entsprechenden Bohrungen von einem Scharnierzapfen durchsetzt sind und dadurch die Platte 18 um eine etwa in der Ebene ihrer Außenseite liegende, zur Profilstütze 12 parallele Achse schwenkbar ist. Beschläge für andere Zwecke können mit entsprechenden Trägereingriffsgliedern in entsprechender Weise an den Beschlageingriffsprofilen 33 bzw. 33a der Stützenprofile 12 und der Traversenprofile 13 befestigt werden, wobei z.B. an den Traversenprofilen 13 Scharnierbeschläge mit horizontaler Scharnierachse für aufklappbare Frontklappen zu befestigen sind. Die Trägereingriffsglieder liegen dabei jeweils vollständig im Abstand vor bzw. hinter den Traversenprofilen 13 bzw. den Halterungsprofilen 32 bzw. 32a.

Wie Fig. 24 zeigt, sind diese Halterungsprofile 32 der Stützenprofile 12 im hinteren Bereich der Möbeleinheit für die Aufnahme von Randstegen der Platte 16 bestimmt, wobei die vordere Flanke dieser Randstege in der Ebene der vorderen Plattenaußenfläche liegt und nur die hintere Flanke gegenüber der hinteren Plattenaußenfläche abgesetzt ist. Die horizontalen Randstege der Platte 16 greifen gemäß Fig. 1 in die Halterungsnuten 41a der zugehörigen Traversenprofile in entsprechender Weise ein.

In den Figuren 11 und 24 sind des weiteren zwei unterschiedliche Verkleidungsprofile 97, 98 dargestellt, von denen das Verkleidungsprofil 97 insbesondere zur Befestigung an dem unteren und oberen Traversenprofil 13 des Frontrahmens so bestimmt ist, daß es zwischen den zugehörigen Stützenprofilen 12 durchgeht. Dieses Verkleidungsprofil 97 weist einen Verkleidungsschenkel 100 auf, welches die jeweils zur Mitte der Höhe der Möbeleinheit weisende Seitenfläche des Traversenprofiles 13 im Bereich des Halterungsprofiles 32a sowie des Beschlageingriffsprofiles 33a bis zur Anschlußflanke 53a bandförmig abdeckt. Dieser Verkleidungsschenkel 100 geht in einen im Winkel zu ihm liegenden Blendenschenkel 101 über, der das Traversenprofil 13 an der Vorderseite bzw. an der durch das Beschlageingriffsprofil 33a gebildeten Längsseite vollständig überdeckt und über das Traversenprofil 13 hinaus verlängert ist. An der Innenseite dieses Blendenschenkels 101 sowie an der Innenseite des Verkleidungsschenkels 100 sind jeweils federnde Clipsschenkel 99 vorgesehen, welche die Clipsköpfe 45a im Bereich der zugehörigen Flanken der Halterungsnuten 41a umgreifen. Der Verkleidungsschenkel 100 ist von solcher Dikke, daß seine Außenfläche bündig mit der zugehörigen Seitenfläche des an ihn anschließenden Randprofiles 14 im Bereich des Beschlagaufnahmeprofiles 31b liegt.

Das Verkleidungsprofil 97 ist mit mindestens einem Dichtlippenprofil 102 baulich vereinigt, das im Eckbereich außen angesetzt ist und nach außen über den Blendenschenkel 101 so vorsteht, daß es an der Innenseite der Platte 17 bzw. 18 anliegen kann.

Das Verkleidungsprofil 98 gemäß Fig. 24 ist dafür bestimmt, das Stützenprofil 12 mit seinem Verkleidungsschenkel 100d seitlich im Bereich des Halterungsprofiles 32 und des Beschlageingriffsprofiles 33 sowie dessen gegeneinander gerichtete Profilschenkel an ihren Außenseiten so abzudekken, daß die Außenseite des an die Anschlußflanke 53 anschließenden Verkleidungsschenkels 100d bündig mit der zugehörigen Seitenfläche des Stützenprofiles 12 im Bereich des jeweiligen Beschlagaufnahmeprofiles 31 liegt. Ein Schenkel des Verkleidungsprofiles 98 dient als Clipsschenkel für den Eingriff in die frei endenden Profilschenkel des Beschlag eingriffsprofiles 33, und an der Innenseite des Verkleidungsschenkels 100d ist ein weiterer Clipsschenkel 99d für den Eingriff auf der anderen Seite des Clipskopfes 45 vorgesehen. Auch dieses Verkleidungsprofil 98, von dem zwei gesonderte auf beiden Seiten des Stützenprofiles 12 angebracht werden können, weist ein Dichtlippenprofil 102d zur Anlage an der Innenseite der entsprechenden Platte auf. Der Beschlagträger 90 kann ein auf beiden Seiten des Trägereingriffsgliedes 91 vorstehendes Deckprofil 94 aufweisen, welches für die Anlage der Dichtlippen 102d im Bereich des Beschlagträgers 90 dienen kann.

Wie Fig. 1 ferner zeigt, kann die jeweilige Beschlagaufnahmenut 34b jedes Randprofiles 14 mit einem clipsartig eingesprengten Kunststoffprofil o.dgl. verschlossen werden, das zweckmäßig als Standleiste 103 so ausgebildet ist, daß es eine geringfügig über die zugehörige Plattenaußenfläche vorstehende, im Querschnitt gekrümmte, streifenförmige Standfläche 104 bildet. Diese Standfläche 104 ist durch einen Quersteg des annähernd U-förmigen Standleisten-Profiles gebildet, dessen Schenkel in die gegeneinander gerichteten Profilschenkel des Beschlagaufnahmeprofiles 31b derart eingreifen, daß die Schenkel der Standleiste 103 an der Bodenfläche der Beschlagaufnahmenut 34b abgestützt sein können.

Wie Fig. 1 ferner zeigt, ist als Sockelabschluß zweckmäßig ein aus Blech annähernd winkelförmig gebogenes Blendenprofil 105 vorgesehen, das teleskopartig in das untere Ende der Stützenprofile 12 eingreift und an der Außen- bzw. Vorderseite von dem Blendenschenkel 101 des Verkleidungsprofiles 97 ebenfalls teleskopartig übergriffen wird. Das Blendenprofil 105 weist einen annähernd vertikalen Blendenschenkel 106 auf, dessen oberes Ende in einen Schlitz im unteren Ende des jeweiligen Stützenprofiles 12 eingreift, wobei dieser Schlitz im Bereich der Halterungsprofile 32 so vorgesehen ist, daß er den Mittelsteg 42 auf einer Breite durchsetzt, die etwa den Nutöffnungen der Halterungsnuten 41 entspricht. Von der vorderen Flanke des Schlitzes 108 bis zur vorderen Längskante ist die Endkante des jeweiligen Stützenprofiles 12 derart zurückversetzt, daß sie etwa mit der unteren Kante der Vorderwand 9 bzw. des Blendenschenkels 101 abschließt. Der Blendenschenkel 106, der an seinem oberen Ende eine Abkröpfung für die Aufnahme eines Dichtstreifens aufweisen kann, kann auch in die jeweils ihm zugekehrte Halterungsnut 41a des über ihm liegenden Traversenprofiles 13 eintauchen. Der kürzere Schenkel des Blendenprofiles 105 ist als an die Fußplatte 69 des Stütz-Fusses 68 angepaßter Befestigungsschenkel 107 ausgebildet, der mit zwei abgekröpften Längsrändern schienenartig auf dem Boden stehen kann und auf welchem die vorderen Stütz-Füsse 68 ruhen. Die hinteren Stütz-Füsse 68 können dagegen unmittelbar auf den Fußboden gestellt werden. Entsprechende Blendenprofile 105f können gemäß den Figuren 29 und 30 auch als Deckenanschluß vorgesehen werden, wobei deren Blendenschenkel zweckmäßig kürzer als im Sockelbereich ist. Das Blendenprofil 105 kann aus einem im Querschnitt annähernd spiegelsymmetrischen U-förmigen Grundprofil 109 gemäß Fig. 31 durch Längsteilung derart hergestellt werden, daß ein Grundprofil 109 zwei gleiche Blendenprofile 105 ergibt. Das Grundprofil 109 ist seinerseits zur Befestigung von Raumteiler-Trennwänden an dem Raumboden, der Raumdecke und/oder den Raumseitenwänden derart geeignet, daß es entsprechende Randzonen der Trennwand justierbar umgreift. Dadurch ergeben sich wesentliche Vereinfachungen bei der Einrichtung und Raumaufteilung.

Wie Fig. 28 zeigt, kann der Decken-Boden 11e auch auf die oberen Enden der Stützenprofile 12 aufgesetzt werden, so daß ein oberer, gesonderter Anschluß zur Raumdecke nicht erforderlich ist. Das obere Traversenprofil 13 kann dabei unmittelbar an der Unterseite des Decken-Bodens 11e liegen, zumal der Traversenverbinder bzw. dessen Spannkopf 61 - in Längsrichtung des Traversenprofiles 13 sowie in Einbaulage gesehen - nach oben nicht über das Traversenprofil 13 vorsteht, sondern praktisch innerhalb eines gedachten Rechteckes liegt, das aus der Innenseite des Auflagerschenkels 24a und der im Winkel daran anschließenden Seite des Verbindungsprofiles 51 des Traversenprofiles 13 ergänzt wird.

Im unteren Bereich der Fig. 28 ist erkennbar, daß das Traversenprofil 13 auch mit oben liegendem Auflagerschenkel 24a montiert werden kann, wobei der Auflagerschenkel 24a dann zweckmäßig mit ihn durchsetzenden Schrauben gegen den auf ihm liegenden Boden 80e verschraubt ist. Dieser Boden 80e kann im dargestellten Ausführungsbeispiel Bestandteil eines offenen Regales 110, einer Vitrine o.dgl. sein, die als in sich geschlossene Baugruppe bzw. Einsatz in die Möbeleinheit eingeschoben ist. Das hierfür vorgesehene Traversenprofil 13, das zweckmäßig zwischen einem obersten und einem untersten Traversenprofil liegt, behindert die Zugänglichkeit von Installationen im Sockelbereich in keiner Weise.

Im Falle der Ausbildung nach Fig. 29 ist der Decken-Boden 11f zwar auf die oberen Enden der Stützenprofile 12 aufgesetzt, jedoch reicht er nicht wie beim Ausführungsbeispiel nach Fig. 28 bis zur Vorderfront der Möbeleinheit, sondern er ist wie im Falle der Ausbildung nach Fig. 1 demgegenüber zurückversetzt. An die Oberseite der Vorderwand 9f schließt jedoch eine plattenförmige Oberblende 111 über eine in Höhe des Decken-Bodens 11f liegende Querfuge an, die mit an ihrer Rückseite liegenden Ständerprofilen 112 formsteif mit dem Frontrahmen verbunden ist. Die unteren Enden der Ständerprofile 112 sind mit Befestigungsbeschlägen 113 an den oberen Enden der Stützenprofile 12 befestigt, wobei die Befestigungsbeschläge 113 in mindestens eines der Befestigungsprofile jedes Stützenprofiles 12, vorzugsweise in des sen Halterungsprofil 32 und/oder in dessen Beschlageingriffsprofil 33, eingreifen. Die Ständerprofile 112 bilden gleichzeitig eine teleskopartige Aufnahme für das Blendenprofil 105f, das hinter der in der Ebene der Vorderwand 9f vorgesehenen Oberblende 111 liegt.

Aus Fig. 30 ist erkennbar, daß der Auflagerschenkel 24a des Traversenprofiles auch an der Oberseite eines Deckenbodens liegen kann und diesen dann hängend trägt, wobei zweckmäßig der aufgehängte Boden 11h von unten mit Schrauben durchsetzt ist, die in dem Auflagerschenkel 24a mit Gewinde gesichert sind. Fig. 30 zeigt auch die Verwendung des Verkleidungsprofiles 97 im Bereich des Deckenanschlusses, wobei das Verkleidungsprofil 97 sinngemäß gegenüber Fig. 11 umgekehrt mit nach oben gerichtetem Blendenschenkel 101 angeordnet ist.

Wie die Figuren 34 und 35 zeigen, kann an der erfindungsgemäßen Rahmenkonstruktion, insbesondere im rückwärtigen Bereich der Möbeleinheit, auch eine Raumteiler-Trennwand 114 aus eingehängten Platten 115 o.dgl. so befestigt werden, daß die Platten 115 zweckmäßig im Abstand hinter der Rückwand 8 liegen. Zu diesem Zweck werden vorteilhaft in den an der hinteren Längskanten liegenden Beschlageingriffsprofilen 33 der hinteren Stützenprofile 12 vertikale Tragschienen 116 mit Tragbeschlägen 117 befestigt, die einteilig mit ihnen aus Blech gebogen sein können und unmittelbar in die Beschlageingriffsnut 43 des Beschlageingriffsprofiles 33 eingreifen sowie z.B. durch in den Boden der Beschlageingriffsnut 43 eingreifende Schrauben 118 gesichert sind. Die Platten 115 weisen Einhängebeschläge 119 auf, mit welchen sie beiderseits in die Tragschiene 116 eingehängt werden können, so daß sie ohne gesonderte Bodenabstützung unmittelbar über die Möbeleinheit gesichert sind. Mit mindestens einem dem Blendenprofil 105 entsprechenden Blendenprofil kann dann der untere und/oder der obere Anschlußbereich der Trennwand 114 überdeckt werden. Die Fugen zwischen benachbarten Platten 115 werden mit Dichtprofilen abgedichtet, die an den Tragschienen 116 befestigt sind und mit Dichtlippen an den Innenseiten der Platten 115 anliegen.

Im Falle der Ausbildung nach den Figuren 36, 37 und 39 ist zusätzlich zwischen der Rückwand 8 und den Platten 115i der Trennwand 114i eine Wärme- und/oder Schall-Isolation 120 vorgesehen, die beispielsweise aus Mineralwolle in einer Dicke von etwa 30 mm besteht. In diesem Fall sind gesonderte Tragbeschläge 117i vorgesehen, die zweckmäßig Trägereingriffsglieder 91i gemäß den Figuren 25 bis 27 aufweisen und an deren nach außen vorstehenden Beschlagkörpern 96i die jeweilige Tragschiene 116i mit Schrauben befestigt ist. Wie Fig. 37 zeigt, kann die Trennwand 114i auch mit Ständerprofilen 112i befestigt werden, die z.B. so ausgebildet sind, daß sie in der beschriebenen Weise bzw. anstatt des Tragbeschlages in das jeweilige Stützenprofil eingesetzt werden können.

In Fig. 33 ist ein Türzargenprofil 121 dargestellt, mit welchem eine die Möbeleinheit durchsetzende Türöffnung so begrenzt werden kann, daß in vorteilhafter Weise ein Türblatt gelagert werden kann, das dann ausschließlich von der Skelett- bzw. Rahmenkonstruktion der Möbeleinheit getragen wird. Das Türzargenprofil 121 ist als nutartig offenes Kastenprofil insoweit ausgebildet, daß es keine über den Umfang geschlossenen Profilkammern aufweist. Im Innern ist das Türzargenprofil 121, das zur Gehrungsverbindung für die Ausbildung eines Türrahmens bestimmt ist, mit nutartig nach innen offenen, im Querschnitt flachprofilförmigen Steckkanälen 122 versehen, die vorzugsweise nahe benachbart zu derjenigen Profilseite vorgesehen sind, welche für die Lage an der Rahmenaußenseite bestimmt ist. Zwei zueinander parallele Steckkanäle 122 liegen einander gegenüber, derart, daß ihre Bodenflächen durch die Innenseiten derjenigen einander gegenüberliegenden Profilwandungen gebildet sind, die für die Lage parallel zur Rahmenebene bestimmt sind. Die Steckkanäle 122 sind durch innere Vorsprünge begrenzt und nach Art hinterschnittener Nuten T-förmig im Profil. Sie dienen für den Einsatz von Eck- bzw. Gehrungs-Verbindungsstücken, die flachwinkelförmig sind, aus Blech bestehen können und mit ihren Schenkeln zur genauen Ausrichtung in die über Eck aneinander schließenden Rahmenzargen eingesetzt sind. Zwischen den Steckkanälen 122 liegt die offene Seite des Türzargenprofiles 121 in Form eines Profilschlitzes 124.

Innerhalb des Türzargenprofiles 121 sind des weiteren mindestens zwei im Abstand zueinander und insbesondere etwa diagonal einander gegenüberliegende Schraubkanäle 123 vorgesehen, die zur Aufnahme der Wendelschäfte von selbstschneidenden Schrauben bestimmt sind, mit welchen die auf Gehrung aneinander anschließenden Rahmenzargen gegeneinander fest gesichert und verspannt werden. Die Schraubkanäle 123 sind durch innen liegende, nutprofilartige Profilabschnitte gebildet, welche den jeweiligen Schraubenschaft nicht auf dem gesamten, nur auf dem größten Teil seines Umfanges umschließen.

Die vertikalen Rahmenzargen bzw. Türzargenprofile 121 können seitlich an die Außenseiten der Platten 15 der Seitenteile 2 so anschließen, daß sie mit einem geringfügig zurückversetzten, auf einer Seite des Profilschlitzes 124 liegenden Profilabschnitt das zugehörige hintere Stützenprofil 12 wenigstens teilweise überdecken. Der demgegenüber weiter vorstehende, auf der anderen Seite des Profilschlitzes 124 liegende Profilabschnitt schließt bündig mit der Trennwand 114 bzw. mit der Außenseite von deren Platte 115 ab und bildet mit deren gegenüberliegenden Kante eine Fuge, die gleich groß wie die übrigen Fugen zwischen den Platten 115 der Trennwand 114 ist. Die vertikalen Türzargenprofile 121 können mit geeigneten Beschlägen unmittelbar am Stützenprofil 12 bzw. an einem von dessen Befestigungsprofilen befestigt sein.

Auf der vom Profilschlitz 124 abgekehrten Seite bildet das Türzargenprofil 121 einen einspringenden Profilfalz 125 mit nutförmigen Dichtungsaufnahmen für Tür-Abdichtungen, wobei dieser Profilfalz 125 für den Eingriff des Türblattes 126 bestimmt ist, das mit Scharnieren 127 unmittelbar an der zugehörigen vertikalen, durch ein Türzargenprofil 121 gebildeten Rahmenzarge zu lagern ist. Die beschriebene Türanordnung stellt eine erfindungswesentliche Ausbildung für Möbeleinheiten und andere Raumtrennungen dar.

Es ist zwar denkbar, die Traversenverbinder 57, die Bodenträger 79, die Beschlagträger 90 und ähnliche Beschlagteile im Falle sehr niedriger Belastungsauslegung aus Kunststoff herzustellen, jedoch ist bevorzugt eine metallische Ausbildung mindestens eines dieser Beschlagteile zweckmäßig als Druckgußteil vorgesehen.

## Ansprüche

1. Möbeleinheit, dadurch gekennzeichnet, daß sie im wesentlichen aus miteinander verbundenen Strangprofilen bzw. Platten (15 bis 20) gebildet ist, die Seitenteile (2), diese verbindende Querteile, nämlich aufrechte Querteile (3, 4), wie Vorder- bzw. Rückwand und/oder annähernd horizontale Querteile (5, 6), wie Böden bilden.

2. Möbeleinheit nach Anspruch 1, dadurch gekennzeichnet, daß die Strangprofile der Seitenteile (2) unabhängig von horizontalen Querteilen (5, 6) über quer liegende Strangprofile tragend miteinander verbunden und über Verbindungsbeschläge (57) im wesentlichen starr miteinander verbunden sind, daß vorzugsweise die Seitenteile (2), insbesondere im wesentlichen unmittelbar, über Strangprofile der aufrechten Querteile (3, 4) miteinander verbunden sind und daß vorzugsweise ein vorderer Frontrahmen und/oder ein hinterer Rückenrahmen aus Strangprofilen vorgesehen sowie insbesondere beide dadurch gebildeten Tragrahmen ausschließlich über Platten (15) der Seitenteile (2) starr miteinander verbunden sind.

3. Möbeleinheit nach einem der Ansprüche 1 oder 2, dadurch gekennzeichnet, daß mindestens ein horizontaler, im wesentlichen durch eine Platte (19) gebildeter Querteil (5), insbesondere mindestens ein Sockel-Boden (10) und/oder mindestens ein Decken-Boden (11), nichttragend und für sich lösbar, mit den Strangprofilen verbunden, vorzugsweise lose auf Profilauflager (22a) aufgelegt ist.

4. Möbeleinheit nach einem der vorhergehenden Ansprüche, dadurch gekennzeichnet, daß mindestens ein Strangprofil an der vorderen Kante einer Seitenteil-Platte (15) als Profilstütze vorgesehen ist, daß insbesondere benachbarte Stützenprofile (12) durch übereinander liegende Traversenprofile (13) miteinander verbunden sind, die im wesentlichen in einer Ebene mit den Stützenprofilen (12) liegen und mit ihren Endflächen an Seitenflächen der Stützenprofile (12) anschließen, daß vorzugsweise mindestens ein durch zwei Stützenprofile (12) und zwei Traversenprofile (13) gebildeter Tragrahmen, insbesondere der Rückenrahmen, eine an seiner Innenseite umlaufende Plattenaufnahme, wie eine Plattenaufnahmenut, bildet und daß vorzugsweise als Verbindungsbeschlag zur Verbindung des jeweiligen Endes eines Traversenprofiles (13) mit einem im Winkel dazu liegenden Strangprofil ein winkelartiger, mindestens ein Steckglied bildender Traversenverbinder (57) vorgesehen ist, dessen einer längerer Schenkel insbesondere ein gezahntes und mindestens eine Aufnahme (60) für einen Eindrücknocken aufweisendes Steckschwert (58) für den Eingriff in das Traversenprofil (13) und dessen anderer Schenkel für den seitlich gesicherten, höhenverstellbaren Eingriff in das Stützenprofil (12) einen Spannkopf (61) bildet, dessen Spannrichtung etwa parallel zum Steckschwert (58) liegt.

5. Möbeleinheit nach einem der vorhergehenden Ansprüche, dadurch gekennzeichnet, daß mindestens ein Strangprofil, insbesondere alle Strangprofile, von offenen Durchbrüchen und/oder geschlossenen Profilkammern frei sind bzw. Halterungen für Fugen-Dichtprofile (102) aufweisen, daß vorzugsweise mindestens ein Strangprofil, insbesondere ein Stützenprofil (12) und/oder ein Platten-Randprofil (14) wenigstens ein Plattenanschlußprofil (22 bzw. 22b) zur Verbindung mit einer Plattenkante, insbesondere mindestens eine etwa parallel zur Plattenebene und/oder zu einer Profilmittelebene (21 bzw. 21b) liegende, an den Flanken gezahnte Stecknut (23 bzw. 23b) für einen in der Dicke reduzierten Randsteg (29) der Platte bzw. mindestens eine seitlich an der Außenseite eines zugehörigen Stecknutschenkels (24 bzw. 24b) vorstehende Abdeckleiste (27 bzw. 27b) für die im Winkel an die jeweilige abgesetzte Seitenflanke des Randsteges (29) anschließende, zurückversetzte Randkante (30) der Platte aufweist, daß vorzugsweise mindestens ein Strangprofil, insbesondere das Stützenprofil (12) und/oder das Traversenprofil (13) an mindestens einer Profilseite, insbesondere an jeder von vier Profilseiten jeweils mindestens ein Befestigungsprofil aufweist, wobei alle Befestigungsprofile insbesondere durch zur zugehörigen Profilseite offene Nuten gebildet sind, daß vorzugsweise mindestens ein Stützenprofil (12) und/oder ein Plattenkanten-Randprofil (14) und/oder ein Traversenprofil (13) beiderseits seitlich Beschlagaufnahmeprofile (31), insbesondere hinterschnittene bzw. annähernd flach C-förmig begrenzte Beschlagaufnahmenuten (34) bildet, die insbesondere seitlich am Plattenanschlußprofil (22) vorgesehen bzw. deren Bodenflächen (35) von den Stecknutschenkeln (24) des Plattenanschlußprofiles (22) begrenzt sind, daß vorzugsweise mindestens ein Stützenprofil (12) und/oder ein Traversenprofil (13) beiderseits seitlich Halterungsprofile (32), insbesondere im wesentlichen nur an einer bzw. an der dem Plattenanschlußprofil (22) zugekehrten Seite bzw. an von seitlich benachbarten Beschlagaufnahmeprofilen (31) begrenzten Seiten hinterschnittene Halterungsnuten (41) bildet, von denen insbesondere mindestens eine am Rückenrahmen als Plattenaufnahmenut und/oder mindestens eine am Frontrahmen für die Aufnahme eines Verkleidungsprofiles (97) o.dgl.

vorgesehen ist, daß vorzugsweise mindestens ein Strangprofil, insbesondere das Stützenprofil (12) und/oder das Traversenprofil (13) an seiner von der zugehörigen Platte abgekehrten Seite ein äußeres Beschlageingriffsprofil (33), insbesondere eine Beschlageingriffsnut (43) bildet, die hinterschnitten bzw. flach C-förmig und/oder von den benachbarten Halterungsprofilen (32) begrenzt ist und daß vorzugsweise mindestens ein Strangprofil, insbesondere das Stützenprofil (12) am Boden (35) der jeweiligen Beschlagaufnahmenut (34) hintereinander liegende Rastglieder (38) für Beschlagteile, wie Bodenträger (79), Schrauben (69) der Traversenverbinder (57) o.dgl. aufweist, wobei die Rastglieder (38) vorzugsweise durch am Boden und Umfang geschlossene Rastvertiefungen (39) gebildet sind, die aus dem zugehörigen Strangprofilsteg bzw. Stecknutschenkel (24) herausgeprägt sind.

6. Möbeleinheit nach einem der vorhergehenden Ansprüche, dadurch gekennzeichnet, daß mindestens ein Traversenprofil (13) ein Profilauflager (22a) für einen Boden bildet, vorzugsweise einen Auflagerschenkel (24a) aufweist, der über ein Verbindungsprofil (51) für den Eingriff des Traversenverbinders (57) vorsteht, wobei insbesondere das Verbindungsprofil (51) eine hinterschnittene, gegenüber dem Beschlageingriffsprofil (33a) flachere bzw. C-förmig und/oder vom zugehörigen Halterungsprofil begrenzte Profilnut (52) bildet, deren Nut-Mittelebene (21a) etwa parallel zur Auflagerebene des Auflagerschenkels (24a) und gegenüber diesem etwa um die halbe Plattendicke versetzt liegt.

7. Möbeleinheit nach einem der vorhergehenden Ansprüche, gekennzeichnet durch mindestens einen Beschlagträger (90) mit einem quer zur Profillängsrichtung in das jeweilige Strangprofil bzw. ein Beschlageingriffsprofil (33) formschlüssig einsetzbaren Trägereingriffsglied (91), das insbesondere annähernd T-profilförmig ist, im Bereich seiner Enden Spannschrauben (95) für die Abstützung an der Bodenfläche (44) der Beschlageingriffsnut (43) trägt und für die Halterung eines Scharniers, eines Trennwandträgers o.dgl. ausgebildet ist.

8. Möbeleinheit nach einem der vorhergehenden Ansprüche, gekennzeichnet durch mindestens einen am jeweiligen Seitenteil (2), insbesondere an einem Stützenprofil (12) über eine Steckverbindung anzubringenden, höhenverstellbaren Stütz-Fuß (68), der vorzugsweise mit einer annähernd über ihre gesamte Gewindelänge Schlüsselflächen (11) bildenden, ggf. in das Plattenanschlußprofil (22) eingreifenden Stellspindel (70) in einem Fußlager (73) gelagert ist, das das Stützenprofil (12) bzw. eine mit diesem verbundene Platte (15) und/oder ein an diesem angeordnete Verkleidungsprofil (98) beiderseits seitlich mit Schenkeln (75, 76) umgreift und/oder eine Steckzunge (77) für den Eingriff in das Beschlagaufnahmeprofil (31) aufweist.

9. Möbeleinheit nach einem der vorhergehenden Ansprüche, dadurch gekennzeichnet, daß mindestens ein Verkleidungsprofil (97 bzw. 98) zur clipsartigen Steckverbindung mit wenigstens einem Strangprofil, insbesondere zur Abdeckung mindestens einer Seitenflanke und/oder der äußeren Längsseite eines Traversenprofiles (13) bzw. zur Abdeckung mindestens einer Seitenflanke eines Stützprofiles (12) im Bereich eines jeweiligen Halterungsprofiles (32) und/oder des Beschlageingriffsprofiles (33) vorgesehen ist, das Clipsschenkel (99 bzw. 99d) zum hintergreifenden Umgreifen des Beschlageingriffsprofiles (33 bzw. 33a) aufweist und/oder daß mindestens ein Dichtlippenprofil (102) für wenigstens eine Plattenfuge o.dgl. vorgesehen ist, das insbesondere zur clipsartigen Steckverbindung mit wenigstens einem Strangprofil ausgebildet bzw. mit dem Verkleidungsprofil (97) durch zusammenführendes Extrudieren schweißungsartig verbunden ist.

10. Möbeleinheit nach einem der vorhergehenden Ansprüche, gekennzeichnet durch mindestens eine Verschluß- bzw. Standleiste (103) für die über die Oberseite geringfügig vorstehende Anordnung an mindestens einem Boden o.dgl., wobei die im Querschnitt annähernd U-förmige Standleiste (103) vorzugsweise für den clipsartigen sowie verschließenden Eingriff in das jeweilige Beschlagaufnahmeprofil (31b) des Plattenkanten-Randprofiles (14) ausgebildet ist und/oder eine gekrümmte Standfläche (104) bildet.

11. Möbeleinheit nach einem der vorhergehenden Ansprüche, gekennzeichnet durch mindestens einen zur höhenverstellbaren Anordnung am Seitenteil (2) bzw. an einem Stützprofil (12), insbesondere an einem Beschlagaufnahmeprofil (31) vorgesehenen Bodenträger (79) für Zwischen-Böden (80) o.dgl., wobei der Bodenträger (79) vorzugsweise mit einem Schwenkriegel (82) formschlüssig verspannt in die Beschlagaufnahmenut (34) quer einsetzbar ist und einen Rastzapfen (85) für den Eingriff in eines der Rastglieder (38) des Stützenprofiles (12) und/oder ein Sicherungsglied (89) für den Eingriff in ein Gegenglied an der Unterseite des Bodens (80) aufweist.

12. Möbeleinheit nach einem der vorhergehenden Ansprüche, gekennzeichnet durch mindestens ein Blendenprofil (105) für den Sockel- und/oder den Deckenbereich des Möbelkörpers, wobei das winkelförmige Blendenprofil (105) insbesondere als gebogenes Blechprofil und/oder als aus einem U-förmigen Grundprofil (109) durch Teilung hergestelltes Profil ausgebildet ist, dessen längerer Blendenschenkel (106) für den Eingriff in einen Profilschlitz (108) im Bereich des zugehörigen Endes des Stützenprofiles (12) und der kürzere Befestigungsschenkel (107) für die Aufnahme eines Standfusses (68) bzw. zur Deckenbefestigung vorgesehen ist.

13. Möbeleinheit nach einem der vorhergehenden Ansprüche, gekennzeichnet durch ein Türzargenprofil (121) zur Aufnahme eines Türblattes einer den Möbelkörper durchdringenden Türöffnung.

14. Möbeleinheit nach einem der vorhergehenden Ansprüche, gekennzeichnet durch mindestens einen Tragbeschlag (117) für eine Raumteiler-Trennwand (114), wobei der Tragbeschlag (117) vorzugsweise Befestigungsglieder für den Eingriff in Stützenprofile (12) und zur Abstandhalterung der Trennwand (114) gegenüber der Rückseite des Möbelkörpers aufweist.

Fig.1

Fig. 2

EP 0 363 720 A2

Fig.3

Fig.5

Fig.4

*Fig.7*

*Fig.6*

*Fig.8*

*Fig.9*

*Fig.10*

*Fig.11*

*Fig.13*

*Fig.12*

*Fig.14*

*Fig.15*

*Fig.16*

EP 0 363 720 A2

Fig.17

Fig.18

Fig.19

Fig.20

Fig.21

Fig.22

Fig.23

# Fig.24

# Fig.27

# Fig.26

VS Möbel

# Fig.25

EP 0 363 720 A2

Fig.28

Fig.29

Fig.30

Fig.31

Fig.32

Fig.33

Fig. 34

Fig. 35

Fig. 36

Fig. 37

Fig.38

Fig.39